(19) Europäisches Patentamt
European Patent Office
Office européen des brevets

(11) **EP 4 414 596 A1**

(12) **EUROPEAN PATENT APPLICATION**
published in accordance with Art. 153(4) EPC

(43) Date of publication:
**14.08.2024 Bulletin 2024/33**

(21) Application number: **22878557.2**

(22) Date of filing: **05.10.2022**

(51) International Patent Classification (IPC):
**F16L 59/04** $^{(2006.01)}$    **F16L 59/02** $^{(2006.01)}$
**H01M 10/613** $^{(2014.01)}$    **H01M 10/647** $^{(2014.01)}$
**H01M 10/658** $^{(2014.01)}$

(52) Cooperative Patent Classification (CPC):
**F16L 59/02; F16L 59/04; H01M 10/613;**
**H01M 10/647; H01M 10/658;** Y02E 60/10

(86) International application number:
**PCT/JP2022/037305**

(87) International publication number:
**WO 2023/058689 (13.04.2023 Gazette 2023/15)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **08.10.2021 JP 2021166144**

(71) Applicant: **Nitto Denko Corporation**
**Ibaraki-shi, Osaka 567-8680 (JP)**

(72) Inventors:
• **KAWAKAMI, Maho**
  **Ibaraki-shi, Osaka 567-8680 (JP)**
• **SASAKI, Shu**
  **Ibaraki-shi, Osaka 567-8680 (JP)**
• **FUKE, Kazuhiro**
  **Ibaraki-shi, Osaka 567-8680 (JP)**

(74) Representative: **Grünecker Patent- und**
**Rechtsanwälte**
**PartG mbB**
**Leopoldstraße 4**
**80802 München (DE)**

(54) **THERMAL INSULATION MATERIAL AND METHOD FOR PRODUCING THERMAL INSULATION MATERIAL**

(57)    An object is to provide a thermal insulation material excellent in both thermal insulation property and mechanical strength. A thermal insulation material includes a thermal insulation layer containing silicon dioxide particles and inorganic fibers, and is excellent in both thermal insulation property and mechanical strength, because density $\rho$ [g/cm$^3$] of thermal insulation layer, and a cumulative proportion $R_1$ for a fiber length of > 0 mm and < 4 mm regarding inorganic fibers contained in the thermal insulation layer and a cumulative proportion $R_2$ for a fiber length of $\geq$ 3 mm and < 30 mm regarding inorganic fibers contained in the thermal insulation layer satisfy a relational expression (I) below, $R_1$ and $R_2$ being calculated according to predetermined calculation formulae when the inorganic fibers contained in the thermal insulation layer are summed up based on predetermined conditions.

```
Relational expression (I):

0.23R₁ + 0.24 < ρ ≤ -0.11R₂ + 0.53
```

$$0.23R_1 + 0.24 < \rho \leq -0.11R_2 + 0.53$$

**(Cont. next page)**

EP 4 414 596 A1

# FIG.1

**Description**

Technical Field

The present invention relates to a thermal insulation material and a method for producing a thermal insulation material, and more specifically to a thermal insulation material including a thermal insulation layer containing a specific inorganic fiber, and a method for producing a thermal insulation material.

Background Art

Nonaqueous electrolyte secondary batteries such as lithium ion secondary batteries and the like are widely used as power sources of electric vehicles such as hybrid cars, electric cars, and the like, portable electronic devices such as portable terminals, portable phones, laptop personal computers, and the like, wearable devices, and the like. Nonaqueous electrolyte secondary batteries typically include a plurality of battery cell layers each including a positive electrode, a negative electrode, and a nonaqueous electrolyte.

Nonaqueous electrolyte secondary batteries are being developed toward a higher energy density in order to improve the battery performance. However, this may drive battery cells to a thermal runaway due to overcharging or internal short-circuiting during use. Moreover, a thermal runaway of one battery cell may cause a thermal chain reaction to transfer heat to adjoining battery cells to also drive the adjoining battery cells to a thermal runaway. In case of this event, a thermal insulation material is placed between battery cells in order to avoid contact between adjoining battery cells and thermally insulate the battery cells from each other.

For example, a spacer disclosed as a thermal insulation material used in nonaqueous electrolyte secondary batteries is formed in a corrugated plate-shaped spring, and is configured to function as a path of a cooling medium and to also elastically deform by conforming to deformation of a battery to maintain the load on the battery to be substantially constant (for example, see PTL 1).

Citation List

Patent Literature

[PTL 1] Japanese Patent Application Laid-Open Publication No. 2000-48867

Summary of Invention

Technical Problem

It is an object of an embodiment of the present invention to provide a thermal insulation material excellent both in a thermal insulation property and in a mechanical strength.

Solution to Problem

One embodiment of a thermal insulation material according to the present invention is a thermal insulation material containing hydrophilic fumed silica and inorganic fibers, wherein a fiber length of the inorganic fibers is 6 mm or longer and shorter than 35 mm, and an area of voids formed in surfaces of the thermal insulation material is larger than 0% and smaller than 22% of an area of all of the surfaces of the thermal insulation material.

Advantageous Effects of Invention

The one embodiment of the thermal insulation material according to the present invention can provide a thermal insulation material excellent both in a thermal insulation property and in a mechanical strength.

Brief Description of Drawings

[FIG. 1] FIG. 1 is an oblique view illustrating an example of a thermal insulation material according to an embodiment of the present invention.
[FIG. 2] FIG. 2 is a cross-sectional view taken along a line I-I of FIG. 1.

[FIG. 3] FIG. 3 is an oblique view illustrating another example of a thermal insulation material according to an embodiment of the present invention.

[FIG. 4] FIG. 4 is a cross-sectional view taken along a line II-II of FIG. 3.

[FIG. 5] FIG. 5 is a plan view of FIG. 4.

[FIG. 6] FIG. 6 is an oblique view illustrating an example of a lithium ion battery pack.

[FIG. 7] FIG. 7 is a partial cross-sectional view of a lithium ion battery pack.

[FIG. 8] FIG. 8 is a SEM image of a surface of Example 1.

[FIG. 9] FIG. 9 is a drawing illustrating the result of binarization of the surface of Example 1.

[FIG. 10] FIG. 10 is a SEM image of a surface of Comparative Example 5.

[FIG. 11] FIG. 11 is a drawing illustrating the result of binarization of the surface of Comparative Example 5.

[FIG. 12] FIG. 12 is a SEM image of a surface of Comparative Example 6.

[FIG. 13] FIG. 13 is a drawing illustrating the result of binarization of the surface of Comparative Example 6.

Description of Embodiments

Embodiments of the present invention will be described in detail below. To facilitate understanding of the description, the same components in the drawings are denoted by the same reference numerals, and overlapping descriptions of the same components will be omitted. The components in the drawings may not be to scale. In the present specification, "through" indicating numerical ranges means that the values specified before and after "through" are included as the lower limit and the upper limit, unless otherwise particularly specified.

<Thermal insulation material>

A thermal insulation material according to an embodiment of the present invention will be described. The thermal insulation material according to the present embodiment includes a thermal insulation layer containing silicon dioxide particles and inorganic fibers, and may be constituted by the thermal insulation layer.

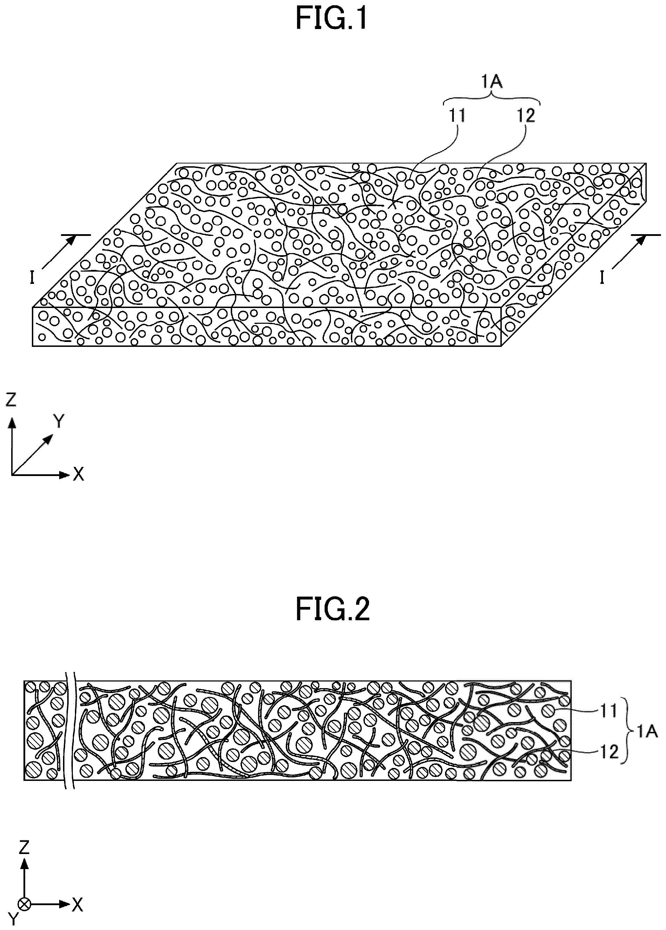

FIG. 1 is an oblique view illustrating an example of the thermal insulation material according to the present embodiment. FIG. 2 is a cross-sectional view taken along a line I-I of FIG. 1. As illustrated in FIG. 1 and FIG. 2, the thermal insulation material 1A according to the present embodiment is constituted by a thermal insulation layer containing hydrophilic fumed silica 11 serving as silicon dioxide particles, and inorganic fibers 12. The thermal insulation layer is a molded body containing the hydrophilic fumed silica 11 and the inorganic fibers 12. The thermal insulation material 1A is formed in a sheet shape, and is formed in an approximately rectangular shape in a plan view.

In the present specification, the direction of the thickness (vertical direction) of the thermal insulation material 1A is defined as the Z-axis direction, and transverse directions (horizontal directions) orthogonal to the direction of the thickness are defined as the X-axis direction and the Y-axis direction. The direction to the upper side of FIG. 1 and FIG. 2, which is one principal surface side of the thermal insulation material 1A, is defined as the +Z-axis direction, and the direction to the lower side of FIG. 1 and FIG. 2, which is the other principal surface side of the thermal insulation material 1A, is defined as the -Z-axis direction. In the following description, for expediency of description, the +Z-axis direction will be described as the upper side, the top side, upward, above, and the like, and the -Z-axis direction will be described as the lower side, the bottom side, downward, under, and the like. These terms do not represent the universal relationship in height.

The thermal insulation layer satisfies an expression (I) below, where $\rho$ represents the density [g/cm$^3$] of the thermal insulation layer, $R_1$ represents a cumulative proportion for a fiber length of longer than 0 mm and shorter than 4 mm regarding the inorganic fibers contained in the thermal insulation layer, and $R_2$ represents a cumulative proportion for a fiber length of 3 mm or longer and shorter than 30 mm regarding the inorganic fibers contained in the thermal insulation layer, $R_1$ and $R_2$ being calculated according to (d) Cumulative proportion calculation formulae indicated below when the inorganic fibers contained in the thermal insulation layer are summed up based on (a) Class divisions defined below, (b) Class value condition defined below, and (c) Frequency condition defined below,

$$\text{Relational expression (I):}$$

$$0.23R_1 + 0.24 < \rho \le -0.11R_2 + 0.53$$

(a) Class divisions:

Fiber length of longer than 0 mm and shorter than 1 mm, fiber length of 1 mm or longer and shorter than 2 mm, fiber length of 2 mm or longer and shorter than 3 mm, ..., and fiber length of 29 mm or longer and shorter than 30 mm

(b) Class value condition:

Median of each class (fiber length of 0.5 mm, fiber length of 1.5 mm, fiber length of 2.5 mm, ..., and fiber length of 29.5 mm)

(c) Frequency condition:

Number of inorganic fibers belonging to each class

(d) Cumulative proportion calculation formulae:

$R_1$ = {(Product of class value and frequency of the fiber length class of longer than 0 mm and shorter than 1 mm) + (Product of class value and frequency of the fiber length class of 1 mm or longer and shorter than 2 mm) + (Product of class value and frequency of the fiber length class of 2 mm or longer and shorter than 3 mm) + (Product of class value and frequency of the fiber length class of 3 mm or longer and shorter than 4 mm)} / (Sum total of the products of class value and frequency of all classes)

$R_2$ = {(Product of class value and frequency of the fiber length class of 3 mm or longer and shorter than 4 mm) + (Product of class value and frequency of the fiber length class of 4 mm or longer and shorter than 5 mm) + ... + (Product of class value and frequency of the fiber length class of 29 mm or longer and shorter than 30 mm)} / (Sum total of the products of class value and frequency of all classes)

"Summing up the inorganic fibers contained in the thermal insulation layer based on (a) Class divisions, (b) Class value condition, and (c) Frequency condition" means measuring the fiber length of each organic fiber contained in the thermal insulation layer, sorting the inorganic fibers into the respective classes based on (a) Class divisions, and further counting the number of inorganic fibers belonging to each class as is made known from the sorting, to determine the class value and the frequency of each class. The class value of each class is spontaneously determined because (b) Class value condition specifies that the class value is "the median of each class". The frequency of each class is determined by counting the number of inorganic fibers because (c) Frequency condition specifies that the frequency is "the number of inorganic fibers belonging to each class".

"Calculating according to (d) Cumulative proportion calculation formulae" means calculating the cumulative proportions by assigning the class values and the frequencies of the respective classes obtained by the summing in the cumulative proportion calculation formula for calculating the cumulative proportion $R_1$ for the fiber length of longer than 0 mm and shorter than 4 mm and in the cumulative proportion calculation formula for calculating the cumulative proportion $R_2$ for the fiber length of 3 mm or longer and shorter than 30 mm.

In the cumulative proportion calculation formulae, "Product of class value and frequency of a given class" represents the value (product) obtained by multiplying the class value of the class and the frequency of the class, and "Sum total of the products of class value and frequency of all classes" represents the value (sum total) obtained by calculating the product of the class value and the frequency for all classes, and adding up the products of all of the classes.

Each cumulative proportion calculation formula is a formula that specifies dividing the sum total of the products of class value and frequency of classes in a specific range by the sum total of the products of class value and frequency of all classes. Hence, the formula can be said to represent the occupation proportion of the classes in the specific range with respect to all classes.

The cumulative proportion $R_1$ for the fiber length of longer than 0 mm and shorter than 4 mm can be said to represent the occupation proportion of inorganic fibers having relatively short fiber lengths, and the cumulative proportion $R_2$ for the fiber length of 3 mm or longer and shorter than 30 mm can be said to represent the occupation proportion of inorganic fibers having relatively long fiber lengths. In a case where inorganic fibers having a fiber length of 0.1 mm or shorter and inorganic fibers having a fiber length of 30 mm or longer are contained in the thermal insulation layer, such inorganic fibers are to be summed up as not belonging to any class.

It is not necessarily necessary to measure the fiber length of the inorganic fibers and the number of the inorganic fibers by observing all inorganic fibers from the entirety of the thermal insulation layer. For example, in a case where it can be deemed by a certain probability that the material distribution or the like in the thermal insulation layer is uniform, the measurement may be performed by observing a part of the thermal insulation layer and measuring the fiber length and the number of the inorganic fibers contained in the part. The measurement of the fiber length and the number of the inorganic fibers may be performed using, for example, FiberShape available from IST AG.

As a result of earnest studies into a thermal insulation layer excellent both in a thermal insulation property and in a mechanical strength, the present inventors have made it clear that the density of the thermal insulation layer and the fiber length distribution of the inorganic fibers largely contribute to the thermal insulation property and the mechanical strength. For example, increasing the density of the thermal insulation layer can improve the mechanical strength of the thermal insulation layer, but can also be a factor that reduces the thermal insulation property. The inorganic fibers may reduce the mechanical strength of the thermal insulation layer in a case where a shorter fiber length proportion is excessively high or a longer fiber length proportion is excessively high conversely. The present inventors have found that a thermal insulation layer would be excellent both in the thermal insulation property and in the mechanical strength through utilization of "the density $\rho$ of the thermal insulation layer", "the cumulative proportion $R_1$" representing the proportion of inorganic fibers having relatively short fiber lengths, and "the cumulative proportion $R_2$" representing the proportion of inorganic fibers having relatively long fiber lengths as variables, and management of these variables to satisfy "the expression (I): $0.23R_1 + 0.24 < \rho \leq -0.11R_2 + 0.53$".

The density $\rho$ of the thermal insulation layer is not particularly limited as long as it satisfies the expression (I), yet is typically from 0.2 g/cm$^3$ through 0.5 g/cm$^3$, and is preferably 0.30 g/cm$^3$ or greater, more preferably 0.35 g/cm$^3$ or greater, and yet more preferably 0.37 g/cm$^3$ or greater, and is preferably 0.45 g/cm$^3$ or less. When the density $\rho$ of the thermal insulation layer is in the range described above, an excellent thermal insulation property and an excellent mechanical strength are likely to be obtained.

The cumulative proportion $R_1$ is not particularly limited as long as it satisfies the expression (I), yet is preferably 0.9 or less, more preferably 0.85 or less, yet more preferably 0.8 or less, and particularly preferably 0.75 or less, and is preferably 0.05 or greater. When the cumulative proportion $R_1$ is in the range described above, an excellent thermal insulation property and an excellent mechanical strength are likely to be obtained.

The cumulative proportion $R_2$ is not particularly limited as long as it satisfies the expression (I), yet is preferably 0.1 or greater, more preferably 0.2 or greater, yet more preferably 0.25 or greater, and particularly preferably 0.3 or greater, and is preferably 0.99 or less. When the cumulative proportion $R_2$ is in the range described above, an excellent thermal insulation property and an excellent mechanical strength are likely to be obtained.

The "silicon dioxide particles", the "inorganic fibers", and the like that are contained in the thermal insulation layer will be described in detail below.

In terms of structural characteristics, silicon dioxide (silica, $SiO_2$) can be classified into crystalline silica, amorphous silica, and the like. In terms of how to procure, it can be classified into natural silica, synthetic silica, and the like. Furthermore, synthetic silica can be classified into dry silica, wet silica, silica aerogel, and the like depending on the production method. Moreover, dry silica can be classified into silica obtained by a combustion method, silica obtained by an arc method, and the like, and wet silica can be classified into silica obtained by a gel method, silica obtained by a precipitation method, and the like. The type of the silicon dioxide particles in the present invention is not particularly limited, yet dry silica and silica aerogel are preferable, and fumed silica as one type of dry silica is more preferable. Moreover, of fumed silica, hydrophilic fumed silica is particularly preferable.

Hydrophilic fumed silica represents fumed silica mainly containing a hydrophilic silanol group (Si-OH) on the surface, and typically represents fumed silica of which the silanol group is not replaced by a hydrophobic group through a surface treatment or the like.

Typically, the silicon dioxide particles may exist as aggregates of primary particles that have aggregated, or may exist as conglomerate particles resulting from further aggregation of the aggregates. The silicon dioxide particles in the thermal insulation layer may be dispersed in the primary particle state, may be dispersed in the aggregate state, may be dispersed in the conglomerate particle state, or may be dispersed in any combination of these states.

The average primary particle diameter of the silicon dioxide particles is not particularly limited, is typically from 1 nm through 100 nm, yet is preferably 2 nm or greater and more preferably 4 nm or greater, and is preferably 80 nm or less, more preferably 40 nm or less, yet more preferably 30 nm or less, and particularly preferably 20 nm or less. The average primary particle diameter of the silicon dioxide particles in a case of the silicon dioxide particles being fumed silica is typically from 1 nm through 40 nm, yet is preferably 2 nm or greater and more preferably 4 nm or greater, and is preferably 30 nm or less, more preferably 20 nm or less, and yet more preferably 18 nm or less. The average primary particle diameter of the silicon dioxide particles in a case of the silicon dioxide particles being silica aerogel is typically from 1 nm through 20 nm, yet is preferably 18 nm or less and more preferably 10 nm or less. When the average primary particle diameter of the silicon dioxide particles is in the range described above, a good thermal insulation property is likely to be obtained.

An example of the method for knowing the average primary particle diameter of the silicon dioxide particles is a measuring method using an electron microscope such as a Scanning Electron Microscope (SEM), a Transmission Electron Microscope (TEM), and the like. A specific method may be a method of randomly selecting silicon dioxide particles reflected in an electron microscope, measuring the particle diameters of the particles, and calculating the average of the values. When the particles are spherical, the diameter of the particles may be adopted as the particle diameter. When the particles are elliptical, the intermediate value of the shorter diameter and the longer diameter of the particles may be adopted as the particle diameter. When the particles are irregularly-shaped particles, the intermediate value of a shorter side and a longer side of the particles may be adopted as the particle diameter.

The average particle diameter of secondary aggregates (aggregates of primary particles) of the silicon dioxide particles is not particularly limited, is typically from 0.1 um through 100 um, yet is preferably 1 um or greater and more preferably 2 um or greater, and is preferably 90 um or less and more preferably 80 um or less. An example of the method for knowing the average particle diameter of the secondary aggregates of the silicon dioxide particles is a method of measuring the diameter employing the same method as for the primary particle diameter.

The BET specific surface area of the silicon dioxide particles is not particularly limited, is typically 90 $m^2/g$ or greater, yet is preferably 130 $m^2/g$ or greater, more preferably 175 $m^2/g$ or greater, and yet more preferably 200 $m^2/g$ or greater, is typically 400 $m^2/g$ or less, and is preferably 350 $m^2/g$ or less, more preferably 320 $m^2/g$ or less, and yet more preferably 200 $m^2/g$ or less. When the BET specific surface area of the silicon dioxide particles is in the range described above, also a thermal insulation property under high-temperature, high-humidity conditions is likely to be obtained. The BET specific surface area can be measured by a multipoint nitrogen adsorption method (BET method) according to a measuring method compliant with International Standardization Organization (ISO) 5794/1. The nominal BET specific surface area of "AEROSIL380", which is available from Nippon Aerosil Co., Ltd., is 380 $m^2/g$, of which the margin of error is specified to be from 350 $m^2/g$ through 410 $m^2/g$. In this case, the following consideration in the present specification will be based on the nominal value of 380 $m^2/g$.

The apparent specific gravity of the silicon dioxide particles is not particularly limited, is typically from 30 g/L through 130 g/L, yet is preferably 40 g/L or greater and more preferably 50 g/L or greater, and is preferably 100 g/L or less, more preferably 80 g/L or less, and yet more preferably 60 g/L or less. The apparent specific gravity of the silicon dioxide particles may be a value obtained by filling a container in which a cubic content can be measured, such as a 250 mL graduated cylinder or the like, with the silicon dioxide particles, measuring the full mass (X g) and the full cubic content (Y mL) of the silicon dioxide particles, and dividing the full mass by the full cubic content ([apparent specific gravity (g/L)] = X/Y $\times$ 1,000).

Examples of the silicon dioxide particles include: AEROSIL 50, 90, 130, 200, 300, and 380 among AEROSIL series (available from Nippon Aerosil Co., Ltd.), QS-09, QS-10, QS-102, QS-20, QS-30, and QS-40 among REOLOSIL series (available from Tokuyama Corporation), and HDK V15, N20, T30, and T40 among HDK series (available from Wacker Asahikasei Silicone Co., Ltd.), which are hydrophilic fumed silica; AEROSIL R972 and R976S among AEROSIL series (available from Nippon Aerosil Co., Ltd.) and HDK H15, H20, and H30 among HDK series (available from Wacker Asahikasei Silicone Co., Ltd.), which are hydrophobic fumed silica; AIRLICA (obtained from Tokuyama Corporation), which is silica aerogel; and the like. The thermal insulation layer may contain one type of silicon dioxide particles, or may contain two or more types of silicon dioxide particles.

The content of the silicon dioxide particles in the thermal insulation layer is not particularly limited, is typically from 50% by mass through 99.5% by mass, is preferably 60% by mass or greater, more preferably 70% by mass or greater, and yet more preferably 80% by mass or greater, and is preferably 95% by mass or less, more preferably 90% by mass or less, and yet more preferably 85% by mass or less. When the content of the silicon dioxide particles is in the range described above, a good thermal insulation property and a good mechanical strength are likely to be obtained.

The type of the inorganic fibers is not particularly limited, and examples of the inorganic fibers include silica fiber, glass fiber, alumina fiber, silica-alumina fiber, silica-alumina-magnesia fiber, biosoluble inorganic fiber, glass fiber, zirconia fiber, alkaline-earth metal silicate salt fiber, Alkali Earth Silicate (AES) fiber, glass wool, rock wool, basalt fiber, and the like. When the inorganic fibers are any of the above, heat fastness is improved. The thermal insulation layer may contain one type of inorganic fibers or may contain two or more types of inorganic fibers.

The content of the inorganic fibers in the thermal insulation layer is not particularly limited, is typically from 0.5% by mass through 50% by mass, yet is preferably 1% by mass or greater, more preferably 3% by mass or greater, and yet more preferably 5% by mass or greater, and is preferably 40% by mass or less, more preferably 35% by mass or less, and yet more preferably 30% by mass or less. When the content of the fibers is in the range described above, a good thermal resistance is likely to be obtained, and production of the thermal insulation layer is facilitated.

The average fiber length of the inorganic fibers is not particularly limited, is typically from 3.5 mm through 35 mm, yet is preferably 4 mm or longer, more preferably 5 mm or longer, and yet more preferably 5.5 mm or longer, and is preferably 30 mm or shorter, more preferably 25 mm or shorter, yet more preferably 20 mm or shorter, may be 15 mm or shorter, and may be 10 mm or shorter. When the average fiber length of the fibers is in the range described above, a good thermal insulation property and a good mechanical strength are likely to be obtained.

The average fiber diameter of the inorganic fibers is not particularly limited, is typically from 0.1 um through 50 $\mu$m, yet is preferably 1 um or greater, more preferably 5 um or greater, and yet more preferably 7 um or greater, and is preferably 25 um or less, more preferably 20 um or less, and yet more preferably 15 um or less. When the average fiber diameter of the fibers is in the range described above, a good thermal insulation property and a good mechanical strength are likely to be obtained.

The thermal insulation layer may contain organic fibers in addition to the inorganic fibers. Specific examples of the organic fibers include felt made of cellulose fiber, polyester, polypropylene, and the like. Use of the organic fibers may be advantageous in terms of, for example, improving a cushion property, improving durability against fatigue due to repeated stress, and the like. The content of the organic fibers in the thermal insulation layer may be appropriately set such that a desired effect can be obtained from the use, and may be, for example, greater than 0 parts by mass, 1 part by mass or greater, 4 parts by mass or greater, 8 parts by mass or greater, or 16 parts by mass or greater relative to 100 parts by mass of the inorganic fibers. Meanwhile, in some modes, in terms of, for example, heat fastness and the like, the content of the organic fibers in the thermal insulation layer is suitably less than 100 parts by mass, advantageously less than 50 parts by mass, may be less than 20 parts by weight, may be less than 10 parts by weight, and may be less than 5 parts by weight or less than 1 part by weight relative to 100 parts by mass of the inorganic fibers, or the thermal insulation layer may be free of organic fibers.

The thermal insulation layer may contain any other components as long as it is a layer containing the silicon dioxide particles and the inorganic fibers described above. Specific examples include a binder (binding agent), and inorganic particles other than the silicon dioxide particles (hereinafter, may be abbreviated as "other inorganic particles"). The type of the binder in a case of the thermal insulation material containing a binder is not particularly limited, and specific examples of the binder include thermoplastic resins, thermosetting resins, and sugars. The thermal insulation layer may contain one type of a binder or may contain two or more types of binders. By the binder being contained, shape stability is improved.

The type of the binder in a case of the thermal insulation layer containing a binder is not particularly limited. Binders can be classified into organic binders and inorganic binders. Specific examples of organic binders include thermoplastic resins, thermoplastic elastomers, thermosetting resins, thermosetting elastomers, sugars, water-soluble polymers, and the like. Specific examples of inorganic binders include aluminum oxide, zirconium oxide, magnesium oxide, titanium oxide, calcium oxide, and the like. When the binder is any described above, shape stability is improved. The thermal insulation layer may contain one type of a binder or may contain two or more types of binders.

The content of the binder in a case of the thermal insulation layer containing a binder is not particularly limited, is typically from 0.01% by mass through 10% by mass, yet is preferably 0.05% by mass or greater, more preferably 0.1% by mass or greater, and yet more preferably 0.2% by mass or greater, and is preferably 5% by mass or less, more preferably 3% by mass or less, and yet more preferably 1% by mass or less. When the content of the binder is in the range described above, the thermal insulation layer is likely to satisfy both of the thermal insulation property and the shape stability. When the content of the binder is in the range described above, both of the thermal insulation property and the shape stability are likely to be satisfied.

The type of the other inorganic particles in a case of the thermal insulation layer containing the other inorganic particles is not particularly limited, and examples include radiation inhibiting materials for inhibiting heat radiation. The radiation inhibiting material only needs to be able to reduce heat transfer due to radiation, and, for example, a metal oxide having an absorption peak in the infrared range may be used. An absorption peak in the infrared range can be measured using an infrared spectrophotometer. The radiation inhibiting material may also function as a binder for binding the inorganic fibers 12 with each other.

Examples of constituent materials of the radiation inhibiting material include titanium oxide, silicon carbide, titanic iron (ilmenite, FeTiO), zirconium silicate, iron (III) oxide, iron (II) (wustite (FeO), magnetite ($Fe_3O_4$), and hematite ($Fe_2O_3$)), chromium dioxide, zirconium oxide, manganese dioxide, zirconia sol, titania sol, silica sol, alumina sol, bentonite, kaolin, and the like. The thermal insulation layer may contain one type of inorganic particles or contain two or more types of inorganic particles.

The thermal insulation layer is a layer containing the silicon dioxide particles and the inorganic fibers described above, and is preferably a molded body obtained by molding a mixture containing the silicon dioxide particles and the inorganic fibers. For example, the details such as the method for mixing the silicon dioxide particles, the inorganic fibers, and the like in a case of the thermal insulation layer being a molded body obtained by molding a mixture containing the silicon dioxide particles and the inorganic fibers will be described below.

The thickness of the thermal insulation layer is not particularly limited, is typically from 0.5 mm through 10 mm, yet is preferably 1 mm or greater, more preferably 1.5 mm or greater, yet more preferably 2 mm or greater, and is preferably 7 mm or less, more preferably 5 mm or less, and yet more preferably 3 mm or less. When the thickness of the thermal insulation layer is in the range described above, a good thermal insulation property is likely to be obtained, and it is possible to curtail the size of the thermal insulation material. As the thickness of the thermal insulation layer, an average of the values measured at some positions (e.g., ten positions) of a cross-section of the thermal insulation layer using a feeler gauge (e.g., a digital thickness gauge JAN-257 (including a Φ20 gauge head) available from Ozaki Mfg. Co., Ltd.) may be adopted.

It is preferable that the thermal insulation layer includes voids in surfaces of the thermal insulation layer. The area proportion of the voids in the surfaces of the thermal insulation layer is typically greater than 0% and less than 22%, is preferably 2% or greater and more preferably 3% or greater, and is preferably 20% or less, more preferably 18% or less, and yet more preferably 16% or less. When the area proportion of the voids is in the range described above, an excellent thermal insulation property and an excellent mechanical strength are likely to be obtained. The voids appearing in the surfaces of the thermal insulation layer are portions in which the contents of the silicon dioxide particles and the like are relatively low and the thermal insulation property is less likely to be exhibited, and in which the contents of the inorganic fibers and the like are also relatively low and the mechanical strength is less likely to be exhibited. On the other hand, in a case where the surfaces of the thermal insulation layer are completely free of voids, i.e., the area proportion of voids is 0%, it can be predicted that the thermal insulation layer is likely to be less mechanically strong, with a greater difficulty undergoing deformation such as bending and the like.

It is not necessarily necessary to calculate the area proportion of the voids by observing all surfaces of the thermal insulation layer. For example, in a case where it can be deemed by a certain probability that the voids are uniformly distributed, one surface of the thermal insulation layer may be observed, to measure the area of the voids appearing in the observed surface and calculate the area proportion occupied by the voids in the observed surface.

The measurement of the area of the voids may include acquiring a surface image of the thermal insulation layer using an electron microscope such as a Scanning Electron Microscope (SEM), a Transmission Electron Microscope (TEM), or the like, and binarizing the acquired image such that voids and portions other than the voids can be distinguished, to thereby measure the area of the voids.

The binarization process may be performed by using image processing software having a binarization process capability and setting a threshold such that the voids and portions other than the voids can be accurately distinguished. The calculation of the area proportion of the voids may also be performed by appropriately using the functions of the image processing software. For example, in a case where the binarization process is performed such that the voids become white and portions other than the voids become black, the area of the white portions may be divided by the total area of surfaces of the thermal insulation layer that are reflected within the image, and then multiplied by 100 to be calculated as a value in a percent unit.

The flexural strength of the thermal insulation layer is not particularly limited, is typically from 10 N/cm$^2$ through 150 N/cm$^2$, yet is preferably 15 N/cm$^2$ or greater, more preferably 20 N/cm$^2$ or greater, and yet more preferably 25 N/cm$^2$ or greater, and is preferably 140 N/cm$^2$ or less, more preferably 130 N/cm$^2$ or less, and yet more preferably 120 N/cm$^2$ or less.

The flexural strength of the thermal insulation layer may be measured according to the method described in Japanese Industrial Standards JIS A9521:2017 "Thermal insulation material for architecture, 6.11 Flexural strength" and Japanese Industrial Standards JIS K7221-2 "Hard foamed plastic-Flexural test". Specifically, a sample produced by cutting the thermal insulation layer into a predetermined size (for example, 100 mm in length $\times$ 40 mm in width $\times$ 2 mm in thickness) may be measured using a tensile compression universal tester while setting the distance between fulcra to 50 mm.

The thermal conductivity of the thermal insulation layer under pressurization at 80°C at 2 MPa is preferably 0.010 W/K·m or higher, and is preferably 0.3 W/K·m or lower, more preferably 0.1 W/K·m or lower, yet more preferably 0.08 W/K·m or lower, still more preferably 0.06 W/K·m or lower, yet more preferably 0.055 W/K·m or lower, still more preferably 0.045 W/K·m or lower, and further more preferably 0.04 W/K·m or lower. The thermal conductivity of the thermal insulation layer under pressurization at 600°C at 2 MPa is preferably 0.010 W/K·m or higher, and is preferably 0.3 W/K·m or lower, more preferably 0.2 W/K·m or lower, yet more preferably 0.1 W/K·m or lower, still more preferably 0.08 W/K·m or lower, and further more preferably 0.075 W/K·m or lower.

The thermal resistance of the thermal insulation layer under pressurization at 80°C at 2 MPa in a case of the thermal insulation layer being prepared to have a thickness of 2 mm under no pressurization is preferably 0.020 (K·m$^2$)/W or higher, more preferably 0.025 (K·m$^2$)/W or higher, yet more preferably 0.03 (K·m$^2$)/W or higher, and still more preferably 0.035 (K·m$^2$)/W or higher, and is preferably 0.1 (K·m$^2$)/W or lower. The thermal resistance of the thermal insulation layer having an initial thickness of 2 mm under pressurization at 600°C at 2 MPa is preferably 0.010 (K·m$^2$)/W or higher, more preferably 0.015 (K·m$^2$)/W or higher, and yet more preferably 0.020 (K·m$^2$)/W or higher, and is preferably 0.1 (K·m$^2$)/W or lower.

The thermal conductivity of the thermal insulation layer may be measured according to the method described in Japanese Industrial Standards JIS A 1412-2:1999 "Method for measuring thermal resistance and thermal conductivity of thermal insulation materials-Section 2: Heat flow meter method (HFM method)".

The heat flow meter method (HFM method) is a secondary measuring method or a comparative measuring method for measuring heat transfer properties such as thermal conductivity, thermal resistance, and the like, by comparing a flat plate-shaped thermal insulation material (thermal insulation layer), which is the test specimen, with a standard plate. Detailed measurement procedures and measurement conditions will be described below.

The thermal insulation layer is cut into a predetermined size (e.g., 20 mm $\times$ 20 mm) to prepare a test specimen. For example, an alumina composite material ("RS-100", available from ZIRCAR Refractory Composites, Inc., having a thickness of 5 mm and a thermal conductivity of 0.66 W/K·m) or the like is prepared as the standard plate. Next, a first thermocouple, a titanium plate, the thermal insulation layer, a titanium plate, a second thermocouple, the standard plate, and a third thermocouple are placed in this order in the descending order on the surface of a lower board of a pneumatic press machine, and sandwiched between an upper board and the lower board such that the test specimen, the standard plate, the thermocouples, and the like are tightly contacted with each other. Then, the upper board and the lower board are heated to respective predetermined measurement temperatures, and the pneumatic press machine applies a load to the test specimen and the like and pressurizes them such that they are at a predetermined measurement pressure.

As the measurement temperatures, the temperature of the upper board on the first thermocouple side may be 80°C, and the temperature of the lower board on the third thermocouple side may be 30°C. As the measurement temperatures for high-temperature conditions, the temperature of the upper board on the first thermocouple side may be 600°C, and the temperature of the lower board on the third thermocouple side may be 40°C.

The measurement pressure may be 2 MPa (load: 800 N). The measurement may be continued in the heating-pressurizing state until the temperatures detected by the thermocouples stabilize, and the thermal conductivity k1 of the thermal insulation layer may be calculated according to a formula (I) below based on the temperatures detected by the thermocouples after the temperatures have stabilized, the thickness of the thermal insulation layer under pressurization, the thermal conductivity of the standard plate, and the thickness of the standard plate under pressurization.

$$k1 \; = \; k2 \; \times \; (L1 \; \times \; \Delta T1) \; / \; (L2 \; \times \; \Delta T2) \quad ---(I)$$

(In the formula, k1 represents the thermal conductivity [W/(m·K)] of the thermal insulation layer, k2 represents the thermal conductivity [W/(m·K)] of the standard plate, L1 represents the thickness of the thermal insulation layer under pressurization, L2 represents the thickness of the standard plate, $\Delta T1$ represents the temperature difference between the temperature of the second thermocouple and the temperature of the third thermocouple, and $\Delta T2$ represents the temperature difference between the temperature of the first thermocouple and the temperature of the second thermocouple.)

A temperature detected having stabilized may include a temperature change over an around 10-minute continuous period of time being within a predetermined range (for example, within ±0.1°C).

The thermal resistance of the thermal insulation layer can be calculated according to a formula (II) below based on the thermal conductivity k1 described above and the thickness L1 under pressurization.

$$R1 \; = \; L1/k1 \quad ---(II)$$

(In the formula, R1 represents the thermal resistance [(m²·K)/W] of the thermal insulation layer, k1 represents the thermal conductivity [W/(m·K)] of the thermal insulation layer, and L1 represents the thickness of the thermal insulation layer under pressurization.)

The number of the thermal insulation layer is typically 1 or greater, is typically 10 or less, and is preferably 7 or less and more preferably 5 or less.

The thermal insulation layer may be joined to an adjoining layer via an adhesive agent or a tacky agent, does not need to be joined via an adhesive agent or a tacky agent, and preferably is not joined via an adhesive agent or a tacky agent. By the thermal insulation layer not being joined via an adhesive agent or a tacky agent, i.e., by not using an adhesive agent or a tacky agent, it is possible to make the thermal conductivity lower than when an adhesive agent or a tacky agent is used.

The shape of the thermal insulation layer is not particularly limited. Typical examples of the shape in a case of the thermal insulation layer being seen in a top view include a rectangular shape (for example, a polygonal shape such as a quadrangular shape), a circular shape, an elliptical shape, and the like.

The thermal insulation material may include a layer other than the thermal insulation layer described above, and may include, for example, a coating layer functioning to inhibit detachment of the silicon dioxide particles and the like from the thermal insulation layer or to protect the thermal insulation layer, and a cushion layer functioning to complement physical properties and the like that may fall short when there is only the thermal insulation layer. Hereinafter, a "coating layer", a "cushion layer", and the like will be described in detail.

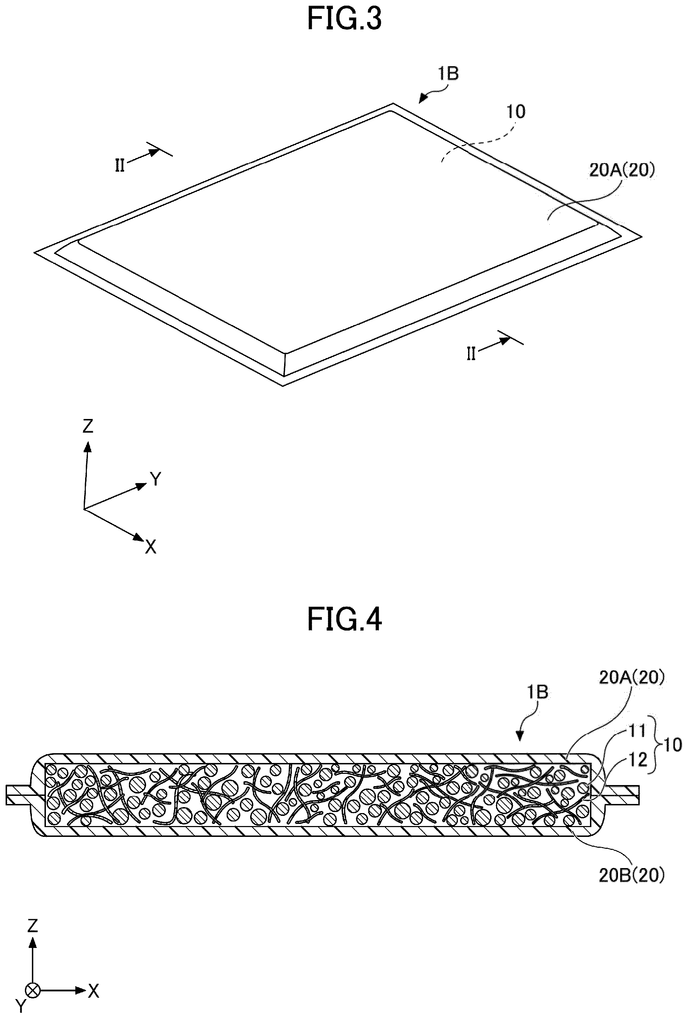

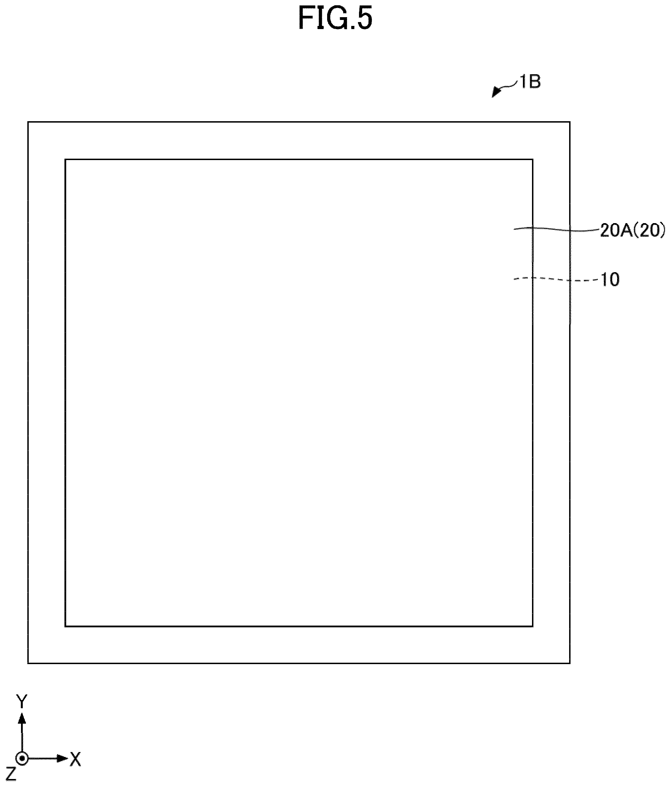

FIG. 3 is an oblique view illustrating another example of the thermal insulation material according to the present embodiment. FIG. 4 is a cross-sectional view taken along a line II-II of FIG. 3. FIG. 5 is a plan view of FIG. 4. As illustrated in FIG. 3 and FIG. 4, a thermal insulation material 1B includes a thermal insulation layer 10 and a coating layer 20 coating the thermal insulation layer 10, and the thermal insulation layer 10 contains hydrophilic fumed silica 11 and inorganic fibers 12. The thermal insulation material 1B is formed in a sheet shape, and, as illustrated in FIG. 5, is formed in an approximately rectangular shape in a plan view.

The type of the resin of the coating layer is not particularly limited. Specific examples of the resin include polyethylene terephthalate (PET), polybutylene terephthalate (PBT), polyimide (PI), flame-retardant polycarbonate (PC), breathable porous polyethylene (PE) having a molecular weight of from 1,000,000 through 7,000,000, flame-retardant polyethylene (PE), biaxially-stretched nylon film (Ny), and the like.

The thickness of the coating layer is not particularly limited, is typically from 0.001 mm through 0.2 mm, is preferably 0.005 mm or greater, more preferably 0.007 mm or greater, and yet more preferably 0.010 mm or greater, and is preferably 0.15 mm or less, more preferably 0.10 mm or less, and yet more preferably 0.050 mm or less. When the thickness of the coating layer is in the range described above, an excellent thermal insulation property and an excellent mechanical strength, and, in addition, fire spread properties are likely to be obtained. The thickness of the coating layer may be measured in the same manner as for the thermal insulation layer.

The number of coating layers is typically 1 or greater, is preferably 2 or greater, is typically 5 or less, and is preferably 4 or less and more preferably 3 or less. The coating layer is made of one resin film, and the one resin film may be folded and respective sides may be inserted between any of thermal insulation layers and cushion layers as if they were two coating layers. The number of coating layers in a case of the one coating layer being folded is regarded to be 2.

In a case where the thermal insulation material is a laminate including two or more coating layers, the two or more coating layers may enclose the thermal insulation layer by sandwiching it from both sides in the direction of the thickness, and the gap between the coating layers may be tightly sealed. The method for tightly sealing the gap between the coating layers is not particularly limited. A typical example of the method is a method of providing a seal on the rim of each coating layer and pasting the seals with each other between the coating layers. The method for pasting the seals is not particularly limited. Examples of the method include heat sealing, welding utilizing ultrasonic welding and the like, and bonding using an adhesive agent, a tacky agent, and the like. In the welding, the resins in the coating layers may be directly welded, or may be welded with a separate resin layer for welding provided.

The coating layer may be joined to an adjoining thermal insulation layer via an adhesive agent or a tacky agent, does not need to be joined via an adhesive agent or a tacky agent, and preferably is not joined via an adhesive agent or a tacky agent.

In a case where the thermal insulation material is a laminate including two or more coating layers and the gap between the two or more coating layers is tightly sealed, it is preferable that the coating layers include a ventilation port that joins the gap and the external space. With the ventilation port provided, it is possible to employ shrink packaging and packaging using a deep draw formed-film, as a packaging method.

The number of ventilation ports in the coating layers is typically 1 or greater, is preferably 2 or greater, is typically 50 or less, and is preferably 25 or less and more preferably 10 or less.

The total opening area of the ventilation ports in the coating layers is typically from 0.000079 $cm^2$ through 10 $cm^2$, yet is preferably 0.0001 $cm^2$ or greater, more preferably 0.005 $cm^2$ or greater, and yet more preferably 0.01 $cm^2$ or greater, and is preferably 5 $cm^2$ or less, more preferably 4 $cm^2$ or less, and yet more preferably 3 $cm^2$ or less. When the total opening area of the ventilation ports in the coating layers is in the range described above, the coating layers can inhibit power spillage from the thermal insulation layer.

The ventilation ports in the coating layers may be coated with a ventilation film. The ventilation rate of the ventilation film is typically from 4 $cm^3/(cm^2 \cdot s)$ through 500 $cm^3/(cm^2 \cdot s)$, preferably 7 $cm^3/(cm^2 \cdot s)$ or higher, more preferably 10 $cm^3/(cm^2 \cdot s)$ or higher, and yet more preferably 21 $cm^3/(cm^2 \cdot s)$ or higher, and is preferably 250 $cm^3/(cm^2 \cdot s)$ or lower, more preferably 200 $cm^3/(cm^2 \cdot s)$ or lower, and yet more preferably 100 $cm^3/(cm^2 \cdot s)$ or lower.

The thermal insulation material may include layers other than the thermal insulation layers and the coating layers described above, and may include a cushion layer functioning to complement physical properties and the like that may fall short when there is only the thermal insulation layer. Hereinafter, a "cushion layer" will be described in detail.

The modulus of compressive elasticity (yield point stress/strain) of the cushion layer is typically from 0.5 MPa through 20 MPa, is preferably 0.7 MPa or greater, more preferably 0.9 MPa or greater, and yet more preferably 1.1 MPa or greater, and is preferably 18 MPa or less, more preferably 16 MPa or less, and yet more preferably 14 MPa or less.

The compressive stress and the modulus of compressive elasticity (yield point stress/strain) of the cushion layer can be measured using a precision universal tester autograph or the like. Specifically, the cushion layer is cut into a predetermined size to prepare a test specimen (the area of the test specimen's cross-section that is parallel with a plane perpendicular to the compression direction is defined as a cross-sectional area to be used to calculate the compressive stress), and compressive stress and displacement of the test specimen when the test specimen is compressed at a predetermined compression rate (for example, 0.5 m/min) are measured. In this way, the compressive stress and the modulus of compressive elasticity can be calculated.

The cushion layer may be a cushion layer made of a fiber molding containing fibers (hereinafter, may be abbreviated as "fiber molding") or made of a foam molding containing a foamed body (hereinafter, may be abbreviated as "foam molding").

The fiber molding is a molding containing fibers. It is preferable that the thermal insulation layer described above is also a molding obtained by molding a mixture containing the silicon dioxide particles, the inorganic fibers, and a nonpolymeric dispersant. Hence, in a case where the thermal insulation layer is a molding, it is possible to distinguish between the molding and the fiber molding in the cushion layer by determining whether silicon dioxide particles are contained or not. That is, a layer containing silicon dioxide particles can be determined to be the thermal insulation layer, and a layer free of silicon dioxide particles and containing fibers can be determined to be the cushion layer. The fiber molding in the cushion layer is preferably a molding containing fibers and free of silicon dioxide particles.

The type of fibers contained in the fiber molding is not particularly limited. As in the case of the thermal insulation layer, fibers can be classified into inorganic fibers and organic fibers. Specific examples include inorganic fibers such as glass wool, rock wool, and the like, felt made of cellulose fiber, polyester, polypropylene, and the like, and the like. Inorganic fibers are preferable, and glass wool is particularly preferable. Glass wool is a cured product that contains fibers and a thermosetting resin and in which the fibers are joined via the thermosetting resin, and has an effect of increasing compressive stress and making a cushioning function be exhibited. The fiber molding may contain one type of fibers, or may contain two or more types of fibers. The gathering form of fibers may be any selected from non-woven fabric, woven fabric, knitting, and the like. Yet, fibers are typically in a non-woven fabric state.

The content of fibers in the fiber molding is not particularly limited, is typically 50% by mass through 99% by mass, yet is preferably 60 % by mass or greater, more preferably 70% by mass or greater, and yet more preferably 80% by mass or greater, and is preferably 97% by mass or less, more preferably 95% by mass or less, and yet more preferably 93% by mass or less. When the content of fibers is in the range described above, the fiber molding is more likely to exhibit a cushioning property.

The average fiber length of fibers contained in the fiber molding is not particularly limited, is typically from 1 mm through 200 mm, yet is preferably 5 mm or greater, more preferably 10 mm or greater, and yet more preferably 20 mm or greater, and is preferably 175 mm or less, more preferably 150 mm or less, and yet more preferably 125 mm or less. When the average fiber length of fibers is in the range described above, a cushioning property is more likely to be exhibited.

The average fiber diameter of fibers contained in the fiber molding is not particularly limited, is typically from 3 um through 13 $\mu$m, yet is preferably 4 um or greater, more preferably 4.5 $\mu$m or greater, and yet more preferably 5 um or greater, and is preferably 10 um or less, more preferably 9 um or less, and more preferably 8 um or less. When the average fiber diameter of fibers is in the range described above, the fiber molding is likely to satisfy both of a cushioning property and a low thermal conductivity.

The fiber molding is a molding containing fibers. Yet, it is preferable that the fiber molding contains a binder (binding agent) in addition to the fibers. The type of the binder contained in the fiber molding is not particularly limited, yet binders can be classified into organic binders and inorganic binders.

Specific examples of organic binders include thermoplastic resins, thermoplastic elastomers, thermosetting resins, thermosetting elastomers, sugars, water-soluble polymer, and the like. Specific examples of inorganic binders include aluminum oxide, zirconium oxide, magnesium oxide, titanium oxide, calcium oxide, and the like. When the binder is any of the above, shape stability is improved. The thermal insulation layer may contain one type of a binder, or may contain two or more types of binders.

The content of the binder in the fiber molding is not particularly limited, is typically from 1% by mass through 50% by mass, yet is preferably 2% by mass or greater, more preferably 5% by mass or greater, and yet more preferably 7% by mass or greater, and is preferably 40% by mass or less, more preferably 30% by mass or less, and yet more preferably 20% by mass or less. When the content of the binder is in the range described above, a lower thermal conductivity is obtained and a cushion property is improved.

The fiber molding is a molding containing fibers. Yet, it is preferable that the fiber molding is a molding obtained by molding a mixture containing fibers and a binder and free of hydrophilic fumed silica. Some fibers that may be used in the fiber molding are sold in a state of being dispersed in a thermosetting resin serving as a binder. Such fibers can become a fiber molding by being cut into an intended shape and subsequently heated and compressed.

The foam molding is a molding containing a foamed body. The material of the foamed body is typically a resin such as a thermoplastic resin, a thermosetting resin, and the like. To obtain the foamed body by molding, molding may be performed by appropriately employing a publicly-known molding method and the conditions of the method.

The type of the resin of the foamed body contained in the foam molding is not particularly limited. Specific examples include foam obtained by foaming polyolefin-based resins such as polyethylene, polypropylene, and the like, polyethylene terephthalate resins, vinyl chloride resins (PVC), styrene-based resins such as polystyrene and the like, polyurethane-based resins such as polyurethane resins and the like, resol-type phenol resins such as phenol resins (PF) and the like, melamine-based resins such as melamine resins (MF) and the like, and epoxy-based resins such as epoxy resins (EP) and the like.

The cell structure of the foam molding may be made of independent cells or continuous cells, and may be appropriately selected in accordance with the intended physical property and the like.

In a case where the thermal insulation material includes a cushion layer, the thickness of the cushion layer is typically from 0.5 mm through 10 mm, yet is preferably 1 mm or greater, more preferably 1.5 mm or greater, and yet more preferably 2 mm or greater, and is preferably 7 mm or less, more preferably 6 mm or less, and yet more preferably 5 mm or less. When the thickness of the cushion layer is in the range described above, stress that may occur due to battery expansion can be suitably cushioned.

To measure the thickness of the cushion layer, the thickness of a cross-section of the cushion layer may be measured using a feeler gauge (a digital thickness gauge JAN-257 including a $\Phi$20 gauge head, available from Ozaki Mfg. Co., Ltd.) as in the case of the thermal insulation layer. Desirably selected ten positions may be measured in this way, and an average of the obtained values may be adopted.

The thermal conductivity of the cushion layer is not particularly limited. Yet, the thermal conductivity of the cushion layer at 80°C at 2 MPa is preferably 0.030 W/K·m or higher, more preferably 0.040 W/K·m or higher, and yet more preferably 0.050 W/K·m or higher, and is preferably 0.2 W/K·m or lower, more preferably 0.2.5 W/K·m or lower, and yet more preferably 0.1 W/K·m or lower. The thermal conductivity of the cushion layer at 600°C at 2 MPa is preferably 0.04 W/K·m or higher, more preferably 0.05 W/K·m or higher, and yet more preferably 0.06 W/K·m or higher, and is preferably 0.30 W/K·m or lower, more preferably 0.25 W/K·m or lower, and yet more preferably 0.20 W/K·m or lower. The thermal conductivity can be measured by the same method as the method for measuring the thermal conductivity of the thermal insulation material.

The thermal resistance of the cushion layer is not particularly limited. Yet, the thermal resistance of the cushion layer at 80°C at 2 MPa is preferably 0.020 $(K·m^2)/W$ or higher, more preferably 0.025 $(K·m^2)/W$ or higher, and yet more preferably 0.03 $(K·m^2)/W$ or higher, and is preferably 0.07 $(K·m^2)/W$ or lower, more preferably 0.06 $(K·m^2)/W$ or lower, and yet more preferably 0.05 $(K·m^2)/W$ or lower. The thermal resistance of the thermal insulation layer at 600°C at 2 MPa is preferably 0.001 $(K·m^2)/W$ or higher, more preferably 0.003 $(K·m^2)/W$ or higher, and yet more preferably 0.005 $(K·m^2)/W$ or higher, and is preferably 0.1 $(K·m^2)/W$ or lower, more preferably 0.05 $(K·m^2)/W$ or lower, and yet more preferably 0.01 $(K·m^2)/W$ or lower. The thermal resistance can be measured by the same method as the method for measuring the thermal conductivity of the thermal insulation material.

The number of cushion layers is typically 10 or less, is preferably 5 or less, yet more preferably 3 or less, may be 2, and may be 1.

The cushion layer may be joined to an adjoining layer via an adhesive agent or a tacky agent, does not need to be joined via an adhesive agent or a tacky agent, and preferably is not joined via an adhesive agent or a tacky agent. By the cushion layer not being joined via an adhesive agent or a tacky agent, i.e., by not using an adhesive agent or a tacky agent, it is possible to inhibit increase in the thermal conductivity better than when an adhesive agent or a tacky agent is used.

The shape of the cushion layer is not particularly limited. Typical examples of the shape in a case of the cushion layer being seen in a top view include a rectangular shape (for example, a polygonal shape such as a quadrangular shape), a circular shape, an elliptical shape, and the like.

As long as the conditions described above are satisfied, the thermal insulation material is not particularly limited in any other respects. The thermal conductivity of the thermal insulation material at 80°C at 2 MPa is preferably 0.02 W/K·m or higher, more preferably 0.03 W/K·m or higher, and yet more preferably 0.04 W/K·m or higher, and is preferably 0.2 W/K·m or lower, more preferably 0.15 W/K·m or lower, and yet more preferably 0.10 W/K·m or lower. The method for measuring the thermal conductivity may be the same measuring method as for the thermal insulation layer.

The thermal resistance of the thermal insulation material at 80°C at 2 MPa in a case of the thermal insulation material being prepared to have a thickness of 2 mm under no pressurization is not particularly limited, and is preferably 0.01 $(K·m^2)/W$ or higher, more preferably 0.02 $(K·m^2)/W$ or higher, and yet more preferably 0.03 $(K·m^2)/W$ or higher, and is preferably 0.10 $(K·m^2)/W$ or lower, more preferably 0.09 $(K·m^2)/W$ or lower, and yet more preferably 0.08 $(K·m^2)/W$ or lower. The method for measuring the thermal resistance may be the same measuring method as for the thermal insulation layer.

The use of the thermal insulation material according to the present embodiment is not particularly limited, and the thermal insulation material can be appropriately used for publicly-known uses in which thermal insulation materials are used. It is particularly preferable to use the thermal insulation material as a thermal insulation material placed between cells of a battery pack, more specifically as a thermal insulation material placed between cells of a lithium ion battery pack.

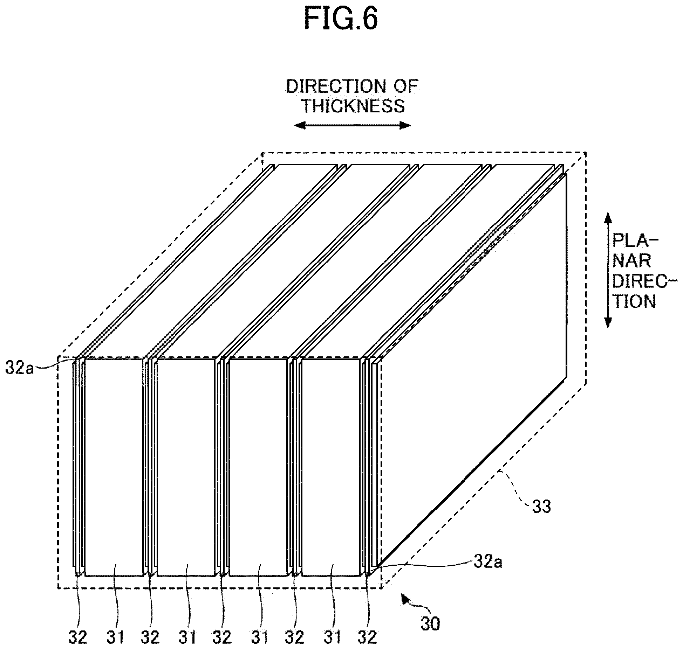

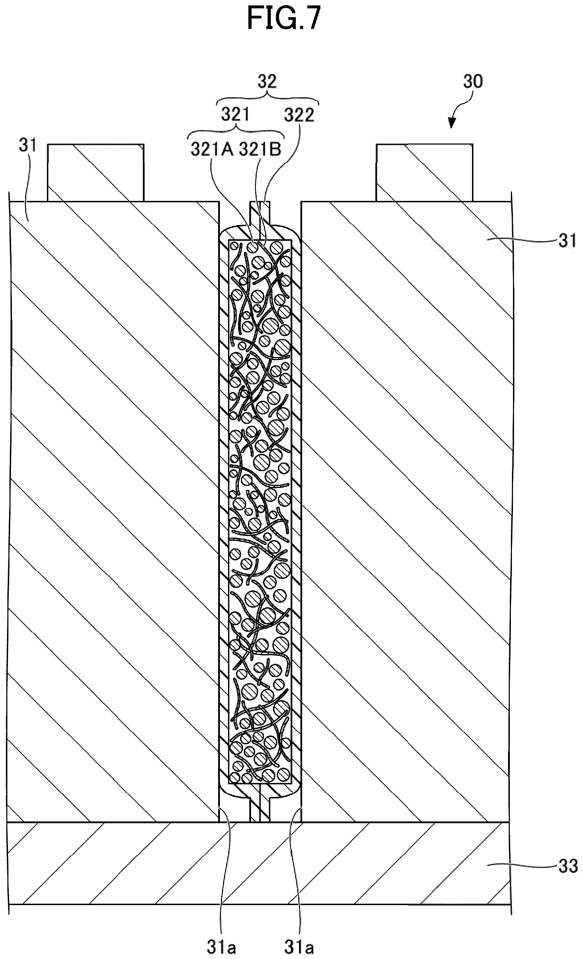

FIG. 6 is an oblique view illustrating an example of a lithium ion battery pack. FIG. 7 is a partial cross-sectional view of the lithium ion battery pack. As illustrated in FIG. 6, a lithium ion battery pack 30 includes a plurality of (four in FIG. 6) cells 31, a plurality of thermal insulation materials 32, and a housing 33, and the plurality of cells 31 are arranged in the housing 33 in the direction of the thickness of the cells 31 via the thermal insulation materials 32. As illustrated in FIG. 7, the plurality of thermal insulation materials 32 are arranged between the plurality of cells 31 in the direction of the thickness of the cells 31 such that the thermal insulation materials 32 contact mutually facing surfaces 51a of the cells 31. A welded portion 32a of the thermal insulation material 32 is situated to contact the internal surface of the housing 33. The thermal insulation material 32 inhibits heat transfer between the cells 31. The thermal insulation material 32 includes a thermal insulation layer 321 and a coating layer 322 coating the thermal insulation layer 321. The thermal insulation layer 321 contains hydrophilic fumed silica 321A and inorganic fibers 321B. The coating layer 322 may be formed of a pair of resin films 322A and 322B.

(Method for producing thermal insulation material)

A method for producing the thermal insulation material is not particularly limited, and it is possible to produce the thermal insulation material by appropriately employing publicly-known processes. A typical example is a production method including the steps described below.

- Step of mixing silicon dioxide particles and inorganic fibers having an average fiber length of from 4 mm through 35 mm in a solvent having a surface tension of from 21 mN/m through 73 mN/m, to obtain a mixture liquid having a consistency of from 60 through 160
- Coating step: Step of applying the mixture liquid obtained in the mixing step to obtain a coating film
- Molding step: Step of molding the obtained coating film to obtain a thermal insulation layer

"Mixing step", "coating step", "molding step", and the like will be described below in detail.

The mixing step is a step of mixing silicon dioxide particles and inorganic fibers having an average fiber length of from 4 mm through 35 mm in a solvent having a surface tension of from 21 mN/m through 73 mN/m, to obtain a mixture liquid having a consistency of from 60 through 160. This is what is generally referred to as a wet method, and, to be more specific, is a step of mixing silicon dioxide particles and inorganic fibers to prepare a mixture liquid (slurry state). Examples of the mixing in the mixing step include use of a disper, a Labo Plastomill, a Trimix, a planetary mixer, a kneader, and the like.

The surface tension of the solvent is from 21 mN/m through 73 mN/m, is preferably 22 mN/m or higher, is preferably 50 mN/m or lower, more preferably 40 mN/m or lower, and yet more preferably 30 mN/m or lower. When the surface tension of the solvent is in the range described above, the thermal insulation property and the mechanical strength are good. An example of the method for measuring the surface tension of the solvent is measurement by a ring method.

The type of the solvent is not particularly limited. Examples of the solvent include protic solvents such as alcohols, amides, water, and the like, aprotic solvents such as esters, ketones, nitriles, ethers, and the like.

The average fiber length of the inorganic fibers blended in the mixing step is from 4 mm through 35 mm, yet is preferably 5 mm or longer, more preferably 5.5 mm or longer, and yet more preferably 6 mm or longer, and is preferably 30 mm or shorter, more preferably 25 mm or shorter, yet more preferably 20 mm or shorter, may be 15 mm or shorter, and may be 10 mm or shorter. When the average fiber length of the fibers is in the range described above, production of the thermal insulation layer is facilitated.

The average fiber diameter of the inorganic fibers is not particularly limited, is typically from 0.1 um through 50 $\mu$m, yet is preferably 1 um or greater, more preferably 5 um or greater, and yet more preferably 7 um or greater, and is preferably 25 um or less, more preferably 20 um or less, and yet more preferably 15 um or less. When the average fiber diameter of the fibers is in the range described above, a good thermal insulation property and a good mechanical strength are likely to be obtained.

The mixing temperature is not particularly limited, and is typically 20°C or higher and lower than or equal to the boiling point of the solvent, is preferably 22°C or higher, and is preferably 50°C or lower, more preferably 40°C or lower, and yet more preferably 30°C or lower. When the mixing temperature is in the range described above, the solvent (e.g., an organic solvent) is not likely to volatilize, and the mixing ratio is not likely to change.

The mixing time is not particularly limited, yet is typically from 1 minute through 5 hours, is preferably 5 minutes or longer, and is preferably 4 hours or shorter, more preferably 2 hours or shorter, and yet more preferably 1 hour or shorter. When the mixing time is in the range described above, the thermal insulation material can be produced efficiently.

The consistency of the mixture liquid is from 60 through 180, yet is preferably 62 or higher, more preferably 63 or higher, and yet more preferably 65 or higher, and is preferably 170 or lower, more preferably 160 or lower, yet more preferably 150 or lower, and particularly preferably 140 or lower. When the consistency of the mixture liquid is in the range described above, it is possible to reduce fiber breakage when dispersing the fibers in a uniform state.

Examples of the method for measuring the consistency of the mixture liquid include the method described in Japanese Industrial Standards JIS K 2220:2013 "Grease-Section 7: Consistency testing method", and particularly measurement as "immiscible consistency". A measuring instrument capable of measuring consistency is commercially available, and specific examples include PENETRO METER available from Nikka Engineering Co., Ltd., and the like. As the measuring procedure, a pot having a size with which the pot is not contacted by a conical weight when the weight is moved down into the pot is prepared, filled with the mixture liquid, and set on the measuring instrument to which the weight is attached. Next, the position of the weight is adjusted to a position at which the weight and the mixture liquid contact each other, and this position is seen as a 0 point. The weight is moved down for 5 seconds (±0.1 seconds) at room temperature (25°C), and a value obtained by multiplying the depth (mm) to which the weight has been intruded into the mixture liquid by 10 is calculated as the consistency.

As the conical weight, a standard cone prescribed by Japanese Industrial Standards may be used. The whole mass of the weight may be 102.5 g ± 0.05 g, and the mass of the holding tool of the weight may be 47.5 g ± 0.05 g.

The coating method and the coating conditions in the coating step are not particularly limited, and a publicly-known method may be appropriately used. For example, a comma coater, a spin coater, a die coater, a dispense, and the like may be used for coating.

The molding method and the molding conditions in the molding step are not particularly limited, and a publicly-known method may be appropriately used. Examples include compression molding using, for example, a hot press or a vacuum press to a density of from 0.3 g/cm$^3$ through 0.5 g/cm3, and drying using, for example, a floating oven, an IR oven, or the like. As the drying conditions, the drying temperature is preferably, for example, from 60°C through 150°C, and the drying time is preferably, for example, from 4 minutes through 20 minutes.

Examples

The embodiment will be further be specifically described by way of Examples. The embodiment should not be construed as being limited by these Examples.

<Production of thermal insulation layer (thermal insulation material)>

[Example 1]

Hydrophilic fumed silica particles ("AEROSIL (registered trademark) 200", obtained from Nippon Aerosil Co., Ltd., having an average primary particle diameter of approximately 12 nm and a BET specific surface area of 200 m$^2$/g) (100 parts by mass) and glass fibers ("CS 25K-871", obtained from Nitto Boseki Co., Ltd., having an average fiber diameter of 13 um and an average fiber length of 25 mm) (20 parts by mass) serving as inorganic fibers were added to a mixture solvent (having a surface tension of 33 mN/m) of acetic acid (having a surface tension of 27 mN/n) (300 parts by mass) as a protic solvent and water (having a surface tension of 73 mN/m) (60 parts by mass), and mixed such that the consistency of the mixture liquid would be from 60 through 180 in the consistency measurement described below. The actual consistency of the obtained mixture liquid was 70.

Next, the obtained mixture liquid was applied over a base material to form a coating film having a thickness of 4 mm. The coating film was then compression-molded using a hot press machine into a sheet shape having a thickness of 2 mm and a density of from 0.3 g/cm$^3$ through 0.5 g/cm$^3$, and then dried at 100°C for 10 minutes, to produce a thermal insulation layer (thermal insulation material), which was a molded body obtained by molding the mixture containing hydrophilic fumed silica and glass fibers. The thickness of the obtained thermal insulation layer was 2 mm, and the density of the thermal insulation layer obtained by the density measurement described below was 0.4 g/cm$^3$.

The obtained thermal insulation layer was cut into a 40-mm cube, the hydrophilic fumed silica was dispersed by ultrasonic vibration, and then the glass fibers were recovered with acetone. Part of the glass fibers was fractionated, removed to a petri dish, and loosened by addition of a small amount of acetone, followed by vaporization of acetone using a hot plate (the dilution factor at which the inorganic fibers are diluted into acetone may be, for example, 0.01 wt%, and it is preferable to fractionate inorganic fibers such that a hundred or more inorganic fibers would be contained in the petri dish).

The glass fibers in the petri dish were observed with an Optical Microscope (OM), to measure the fiber length of each glass fiber. Then, the glass fibers were summed up based on (a) class divisions, (b) class values, and (c) frequency in Table 1 below, and a cumulative proportion $R_1$ for a fiber length of longer than 0 mm and shorter than 4 mm and a cumulative proportion $R_2$ for a fiber length of 3 mm or longer and shorter than 30 mm were calculated according to (d) cumulative proportion calculation formulae below. The cumulative proportion $R_1$ was 0.02, so the left-hand side "0.23$R_1$ + 0.24" of the relational expression (I) was 0.245, which was a value smaller than the density $\rho$ of 0.4 [g/cm$^3$]. On the other hand, the cumulative proportion $R_2$ regarding the inorganic fibers contained in the thermal insulation layer was 0.99, so the righthand side "-0.11$R_2$ + 0.53" of the relational expression (I) was 0.421, which was a value greater than the density $\rho$ of 0.4 [g/cm$^3$]. Hence, the thermal insulation layer of Example 1 satisfied the relational expression (I).

(d) Cumulative proportion calculation formulae:

$R_1$ = {(Product of class value and frequency of the fiber length class of longer than 0 mm and shorter than 1 mm) + (Product of class value and frequency of the fiber length class of 1 mm or longer and shorter than 2 mm) + (Product of class value and frequency of the fiber length class of 2 mm or longer and shorter than 3 mm) + (Product of class value and frequency of the fiber length class of 3 mm or longer and shorter than 4 mm)} / (Sum total of the products of class value and frequency of all classes) shorter than 30 mm)} / (Sum total of the products of

$R_2$ = {(Product of class value and frequency of the fiber length class of 3 mm or longer and shorter than 4 mm) + (Product of class value and frequency of the fiber length class of 4 mm or longer and shorter than 5 mm) + ... + (Product of class value and frequency of the fiber length class of 29 mm or longer and class value and frequency of all classes)

[Example 2]

A thermal insulation layer having a thickness of 2 mm was produced by the same method as in Example 1, except that the blending amount of acetic acid was changed to 400 parts by mass and the blending amount of water was changed to 80 parts by mass from Example 1. The cumulative proportion $R_1$ and the cumulative proportion $R_2$ were calculated by the same method as in Example 1. The results are indicated in Table 1.

[Example 3]

A thermal insulation layer having a thickness of 2 mm was produced by the same method as in Example 1, except that the glass fibers "CS 25K-871" of Example 1 were changed to "CS 13J-803" (obtained from Nitto Boseki Co., Ltd., having an average fiber diameter of 9.5 $\mu$m, and an average fiber length of 13 mm). The cumulative proportion $R_1$ and the cumulative proportion $R_2$ were calculated by the same method as in Example 1. The results are indicated in Table 1.

[Example 4]

A thermal insulation layer having a thickness of 2 mm was produced by the same method as in Example 3, except that the blending amount of acetic acid was changed to 400 parts by mass and the blending amount of water was changed to 80 parts by mass from Example 3. The cumulative proportion $R_1$ and the cumulative proportion $R_2$ were calculated by the same method as in Example 1. The results are indicated in Table 1.

[Example 5]

A thermal insulation layer having a thickness of 2 mm was produced by the same method as in Example 1, except that the glass fibers "CS 25K-871" of Example 1 were changed to "CS 6J-888" (obtained from Nitto Boseki Co., Ltd., having an average fiber diameter of 11 $\mu$m, and an average fiber length of 6 mm). The cumulative proportion $R_1$ and the cumulative proportion $R_2$ were calculated by the same method as in Example 1. The results are indicated in Table 1.

[Comparative Example 1]

A thermal insulation layer having a thickness of 2 mm was produced by the same method as in Example 5, except that the blending amount of acetic acid was changed to 400 parts by mass and the blending amount of water was changed to 80 parts by mass from Example 5. The cumulative proportion $R_1$ and the cumulative proportion $R_2$ were calculated by the same method as in Example 1. The results are indicated in Table 1.

[Comparative Example 2]

A thermal insulation layer having a thickness of 2 mm was produced by the same method as in Example 1, except that the glass fibers "CS 25K-871" of Example 1 were changed to "CS 3J-888" (obtained from Nitto Boseki Co., Ltd., having an average fiber diameter of 11 $\mu$m, and an average fiber length of 3 mm). The cumulative proportion $R_1$ and the cumulative proportion $R_2$ were calculated by the same method as in Example 1. The results are indicated in Table 1.

[Example 6]

A thermal insulation layer having a thickness of 2 mm was produced by the same method as in Example 1, except that the blending amount of acetic acid was changed to 360 parts by mass and the blending amount of water was changed to 0 parts by mass from Example 1. The cumulative proportion $R_1$ and the cumulative proportion $R_2$ were calculated by the same method as in Example 1. The results are indicated in Table 1.

[Example 7]

A thermal insulation layer having a thickness of 2 mm was produced by the same method as in Example 1, except that AES fibers ("BS13 engineered fiber 100/50", obtained from Isolite Insulating Products Co., Ltd., having a density of from 2 g/mm$^3$ through 3 g/mm$^3$, an average fiber diameter of 4 $\mu$m, and an average fiber length of 0.1 mm) (3 parts by mass) were blended in addition to the glass fibers "CS 25K-871", which were the inorganic fibers of Example 1, titanium oxide (30 parts by mass) serving as a radiation inhibiting material was blended, the blending amount of acetic acid was changed to 440 parts by mass, and the blending amount of water was changed to 90 parts by mass. The cumulative proportion $R_1$ and the cumulative proportion $R_2$ were calculated by the same method as in Example 1. The results are indicated in Table 1.

[Example 8]

A thermal insulation layer having a thickness of 2 mm was produced by the same method as in Example 7, except that the blending amount of acetic acid was changed to 750 parts by mass and the blending amount of water was changed to 125 parts by mass from Example 7. The cumulative proportion $R_1$ and the cumulative proportion $R_2$ were calculated by the same method as in Example 1. The results are indicated in Table 1.

[Comparative Example 3]

A thermal insulation layer having a thickness of 2 mm was produced by the same method as in Example 1, except that the glass fibers "CS 25K-871" of Example 1 were changed to glass fibers having an average fiber length of 35 mm (having an average fiber length of 35 mm and an average fiber diameter of 16 um). The cumulative proportion $R_1$ and the cumulative proportion $R_2$ were calculated by the same method as in Example 1. The results are indicated in Table 1.

[Comparative Example 4]

A thermal insulation layer was produced by the same method as in Example 5, except that mixing of hydrophilic fumed silica and glass fibers of Example 5 was changed from the wet method using a solvent to a dry method using no solvent, and compression molding described below was performed. The mixing by the dry method was performed by adding a binder (a polyvinyl alcohol, "GOHSENOL N-300", obtained from Mitsubishi Chemical Corporation) (2 parts by mass) to hydrophilic fumed silica particles (100 parts by mass) and glass fibers (20 parts by mass) without using a solvent. The obtained mixture was compression-molded using a hot press machine. This resulted in a thermal insulation layer having a density of 0.29 g/cm$^3$ and a thickness of 2 mm. The cumulative proportion $R_1$ and the cumulative proportion $R_2$ were calculated by the same method as in Example 1. The results are indicated in Table 1.

[Comparative Example 5]

A thermal insulation layer was produced by the same method as in Example 5, except that mixing of hydrophilic fumed silica and glass fibers of Example 5 was changed from the wet method using a solvent to a dry method using no solvent, and compression molding described below was performed. The mixing by the dry method was performed by adding a binder (a polyvinyl alcohol, "GOHSENOL N-300", obtained from Mitsubishi Chemical Corporation) (2 parts by mass) to hydrophilic fumed silica particles (100 parts by mass) and glass fibers (20 parts by mass) without using a solvent. The obtained mixture was compression-molded using a hot press machine (the difference from Comparative Example 4 was that compression molding was performed such that the density would become a higher density). This resulted in a thermal insulation layer having a density of 0.52 g/cm$^3$ and a thickness of 2 mm. The cumulative proportion $R_1$ and the cumulative proportion $R_2$ were calculated by the same method as in Example 1. The results are indicated in Table 1.

[Comparative Example 6]

A thermal insulation layer having a thickness of 2 mm was produced by the same method as in Example 1, except that the blending amount of acetic acid was changed to 0 parts by mass and the blending amount of water was changed to 480 parts by mass from Example 1. The cumulative proportion $R_1$ and the cumulative proportion $R_2$ were calculated by the same method as in Example 1. The results are indicated in Table 1.

[Table 1]

| (a) Class division | (b) Class value | (c) Frequency | Product of class value and frequency | Cumulative proportion $R_1$ | Cumulative proportion $R_2$ |
|---|---|---|---|---|---|
| Fiber length of > 0 mm and < 1 mm | 0.5 mm | 0 | 0 | 0.02 | |
| Fiber length of ≥ 1 mm and < 2 mm | 1.5 mm | 2 | 3 | | |
| Fiber length of ≥ 2 mm and < 3 mm | 2.5 mm | 1 | 2.5 | | |
| Fiber length of ≥ 3 mm and < 4 mm | 3.5 mm | 3 | 10.5 | | |
| Fiber length of ≥ 4 mm and < 5 mm | 4.5 mm | 4 | 18 | | 0.99 |
| Fiber length of ≥ 5 mm and < 6 mm | 5.5 mm | 6 | 33 | | |
| Fiber length of ≥ 6 mm and < 7 mm | 6.5 mm | 2 | 13 | | |
| Fiber length of ≥ 7 mm and < 8 mm | 7.5 mm | 3 | 22.5 | | |
| Fiber length of ≥ 8 mm and < 9 mm | 8.5 mm | 1 | 8.5 | | |
| Fiber length of ≥ 9 mm and < 10 mm | 9.5 mm | 0 | 0 | | |
| Fiber length of ≥ 10 mm and < 11 mm | 10.5 mm | 1 | 10.5 | | |
| Fiber length of ≥ 11 mm and < 12 mm | 11.5 mm | 2 | 23 | | |
| Fiber length of ≥ 12 mm and < 13 mm | 12.5 mm | 4 | 50 | | |
| Fiber length of ≥ 13 mm and < 14 mm | 13.5 mm | 0 | 0 | | |
| Fiber length of ≥ 14 mm and < 15 mm | 14.5 mm | 3 | 43.5 | | |
| Fiber length of ≥ 15 mm and < 16 mm | 15.5 mm | 1 | 15.5 | | |
| Fiber length of ≥ 16 mm and < 17 mm | 16.5 mm | 0 | 0 | | |
| Fiber length of ≥ 17 mm and < 18 mm | 17.5 mm | 2 | 35 | | |
| Fiber length of ≥ 18 mm and < 19 mm | 18.5 mm | 1 | 18.5 | | |
| Fiber length of ≥ 19 mm and < 20 mm | 19.5 mm | 2 | 39 | | |
| Fiber length of ≥ 20 mm and < 21 mm | 20.5 mm | 2 | 41 | | |
| Fiber length of ≥ 21 mm and < 22 mm | 21.5 mm | 1 | 21.5 | | |
| Fiber length of ≥ 22 mm and < 23 mm | 22.5 mm | 2 | 45 | | |
| Fiber length of ≥ 23 mm and < 24 mm | 23.5 mm | 4 | 94 | | |
| Fiber length of ≥ 24 mm and < 25 mm | 24.5 mm | 10 | 245 | | |
| Fiber length of ≥ 25 mm and < 26 mm | 25.5 mm | 2 | 51 | | |
| Fiber length of ≥ 26 mm and < 27 mm | 26.5 mm | 0 | 0 | | |
| Fiber length of ≥ 27 mm and < 28 mm | 27.5 mm | 0 | 0 | | |
| Fiber length of ≥ 28 mm and < 29 mm | 28.5 mm | 0 | 0 | | |
| Fiber length of ≥ 29 mm and < 30 mm | 29.5 mm | 0 | 0 | | |
| All classes | – | 59 | 843.5 | – | – |

<Evaluation of thermal insulation layer (thermal insulation material) and the like>

(1) Measurement of initial consistency of mixture liquid

The consistency of each of the mixture liquids obtained in Examples 1 to 8 and Comparative Examples 1 to 6 was measured as "immiscible consistency" according to the contents described in Japanese Industrial Standards JIS K 2220:2013 "Grease-Section 7: Consistency testing method". Specifically, a pot having a size with which the pot would not be contacted by a conical weight when the weight would be moved down into the pot was prepared, filled with the mixture liquid, and set on PENETRO METER obtained from Nikka Engineering Co., Ltd. to which a weight was attached. Next, the position of the weight was adjusted to a position at which the weight and the mixture liquid would contact each other, and this position was seen as a 0 point. Then, the weight was moved down for 5 seconds (±0.1 seconds) at room temperature (25°C), and a value obtained by multiplying the depth (mm) to which the weight was intruded into the mixture liquid by 10 was calculated as the consistency. As the conical weight, a standard cone prescribed by Japanese Industrial Standards and having a whole mass of 102.5 g was used. As a holding tool of the weight, one that had a mass of 47.5 g ± 0.05 g was used. The results of consistency of the obtained mixture liquids are indicated in Table 2.

[Table 2]

| | Silicon dioxide particles | | | | Inorganic fibers | | | | | Solvent | | Mixture liquid |
| | | | | | Glass fibers | | | AES fibers | Radiation INH.MATL. | Acetic acid | Water | |
| | Type | BET specific surface area [m²/g] | Av. PRY. PTCL dia. [μm] | Blending amount [part by mass] | Type | Ave. fiber length [mn] | Blending amount [part by mass] | Blending amount [part by mass] | Blending amount [part by mass] | Blending amount [part by mass] | Blending amount [part by mass] | Consistency |
|---|---|---|---|---|---|---|---|---|---|---|---|---|
| Ex. 1 | AEROSIL 200 | 200 | 12 | 100 | CK25K-871 | 25 | 20 | 0 | 0 | 300 | 60 | 70 |
| Ex. 2 | ↑ | ↑ | ↑ | ↑ | ↑ | ↑ | ↑ | ↑ | ↑ | 400 | 80 | 130 |
| Ex. 3 | ↑ | ↑ | ↑ | ↑ | CS13J-803 | 13 | ↑ | ↑ | ↑ | 300 | 60 | 90 |
| Ex. 4 | ↑ | ↑ | ↑ | ↑ | ↑ | ↑ | ↑ | ↑ | ↑ | 400 | 80 | 180 |
| Ex. 5 | ↑ | ↑ | ↑ | ↑ | CS6J-888 | 6 | ↑ | ↑ | ↑ | 300 | 60 | 150 |
| Comp. Ex. 1 | ↑ | ↑ | ↑ | ↑ | ↑ | ↑ | ↑ | ↑ | ↑ | 400 | 80 | 200 |
| Comp. Ex. 2 | ↑ | ↑ | ↑ | ↑ | CS3J-888 | 3 | ↑ | ↑ | ↑ | 300 | 60 | 180 |
| Ex. 6 | ↑ | ↑ | ↑ | ↑ | CS25K-871 | 25 | ↑ | ↑ | ↑ | 360 | 0 | 140 |
| Ex. 7 | ↑ | ↑ | ↑ | ↑ | ↑ | ↑ | ↑ | 3 | 30 | 440 | 90 | 70 |
| Ex. 8 | ↑ | ↑ | ↑ | ↑ | ↑ | ↑ | ↑ | ↑ | ↑ | 750 | 125 | 150 |
| Comp. Ex. 3 | ↑ | ↑ | ↑ | ↑ | – | 35 | ↑ | ↑ | ↑ | 400 | 80 | 100 |
| Comp. Ex. 4 | ↑ | ↑ | ↑ | ↑ | CS6J-888 | 6 | ↑ | ↑ | ↑ | 0 | 0 | – |
| Comp. Ex. 5 | ↑ | ↑ | ↑ | ↑ | ↑ | ↑ | ↑ | ↑ | ↑ | 0 | 0 | – |
| Comp. Ex. 6 | ↑ | ↑ | ↑ | ↑ | CS25K-871 | 25 | ↑ | ↑ | ↑ | 0 | 480 | 65 |

*The upward arrow in Table stands for "the same as what is described in the field immediately above".

(2) Measurement of density of thermal insulation layer (thermal insulation material)

The density of each of the thermal insulation layers obtained in Examples 1 to 8 and Comparative Examples 1 to 6 was measured by the method described below. The thermal insulation layer was cut into a size of 20 mm × 20 mm, and the mass and the thickness of the cut product were measured. The mass was divided by the volume to calculate the density [g/cm$^3$]. The densities of the obtained thermal insulation layers are indicated in Table 3.

(3) Measurement of area proportion of voids in surface of thermal insulation layer (thermal insulation material)

The area proportion of voids in the surfaces of each of the thermal insulation layers obtained in Examples 1 to 8 and Comparative Examples 1 to 6 was measured by the method described below.

A sample having a size of 30 mm × 30 mm was extracted from each thermal insulation material as a measuring sample. The surface geometry of each measuring sample was observed using a scanning electron microscope ("S-3400" obtained from Hitachi High-Technologies Corporation) at a magnification of 30×. The obtained SEM image was subjected to an image analysis using binarization software "ImageJ", and a range defined by x = 760 and y = 760 was selected from the target image and trimmed by selecting "Crop". "Threshold" was selected to monochromatize the trimmed image. "Binary>Watershed" was selected, and then "Analyze Particles" was selected, to calculate the proportion of black portions. The void proportion in the surfaces was calculated according to the formula (1) below. The area proportion of voids in the obtained thermal insulation material is indicated in Table 3.

Void proportion in surface = 1 - (proportion of black portion)          (1)

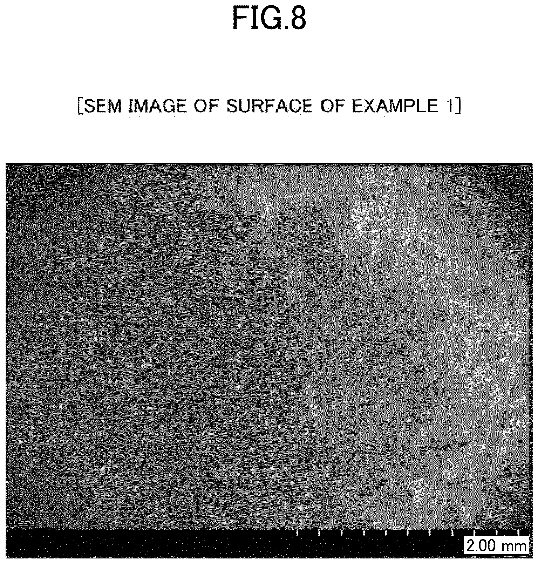

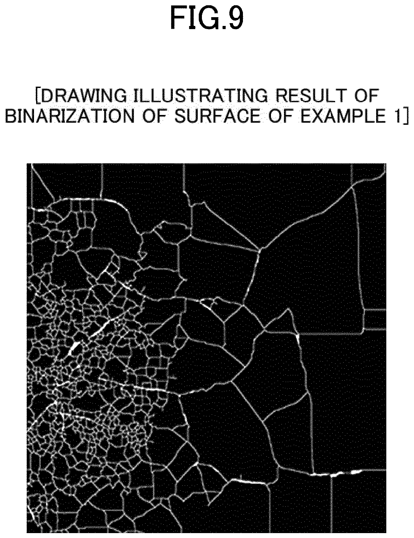

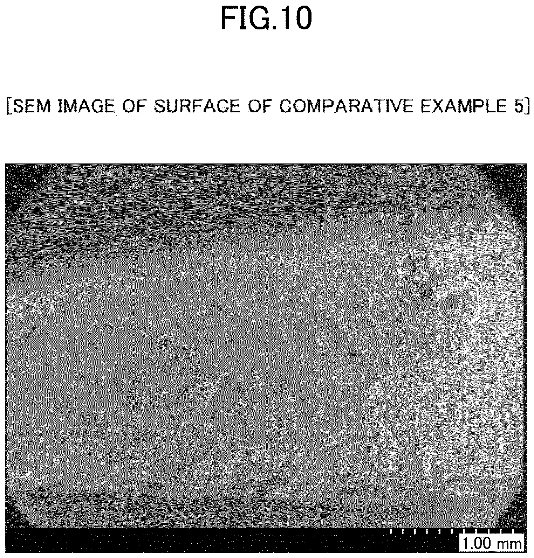

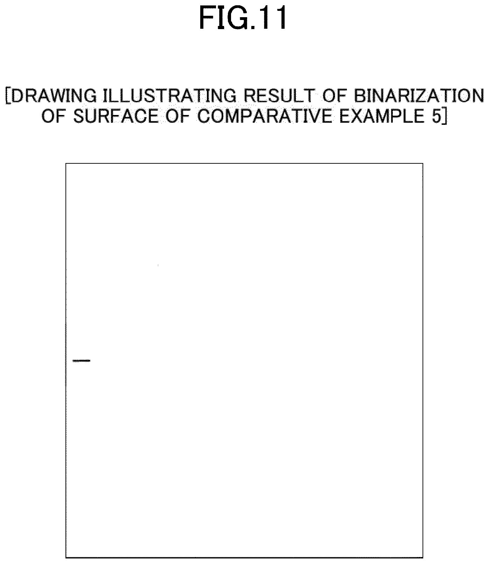

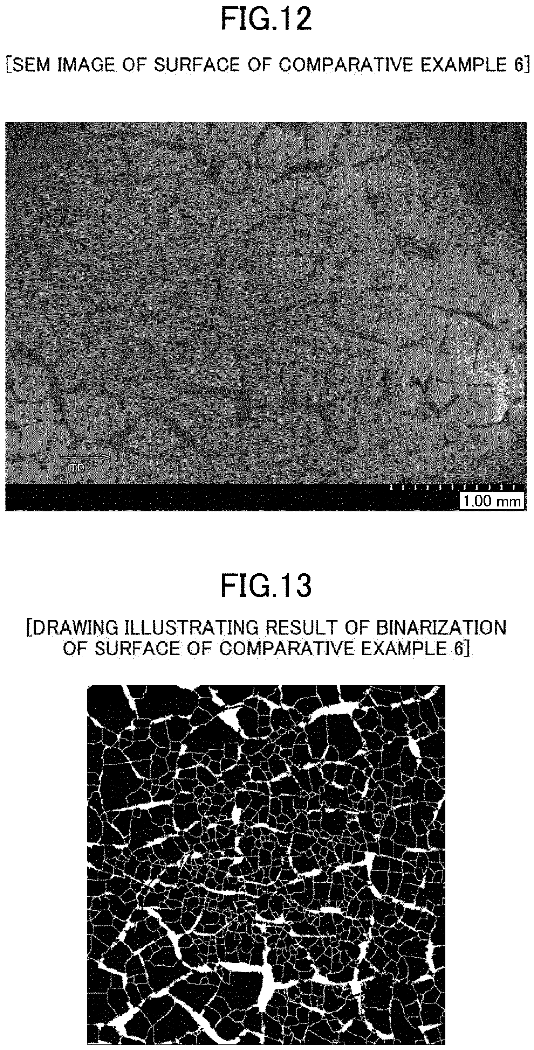

SEM images of the surfaces of the thermal insulation layers of Example 1, Comparative Example 5, and Comparative Example 6 obtained by SEM observation, and drawings illustrating the result of binarization are illustrated in FIG. 8 to FIG. 13. FIG. 8 illustrates the SEM image of a surface of Example 1. FIG. 9 is a drawing illustrating the result of binarization of the surface of Example 1. FIG. 10 illustrates the SEM image of a surface of Comparative Example 5. FIG. 11 is a drawing illustrating the result of binarization of the surface of Comparative Example 5. FIG. 12 illustrates the SEM image of a surface of Comparative Example 6. FIG. 13 is a drawing illustrating the result of binarization of the surface of Comparative Example 6.

(4) Thermal conductivity

The thermal conductivity of each of the thermal insulation layers obtained in Examples 1 to 8 and Comparative Examples 1 to 6 was measured by the method described above, to calculate the thermal resistance.

The thermal conductivity was measured under two conditions, one being 80°C at 2 MPa and the other being 600°C at 2 MPa according to the content described in Japanese Industrial Standards JIS A 1412-2:1999 "Method for measuring thermal resistance and thermal conductivity of thermal insulation materials-Section 2: Heat flow meter method (HFM method)". First, the thermal insulation layer (having a thickness of 2 mm under no pressurization) was cut into a size of 20 mm × 20 mm, to produce a sample. A standard plate (a calcium silicate plate) ("HILUC", obtained from A&A Material Corporation, having a thickness of 5 mm, and 0.22 W/(m·K)), and aluminum plates ("A1060P", having a thickness of 0.2 mm) were prepared. In the measurement at 80°C, the calcium silicate plate ("HILUC", obtained from A&A Material Corporation, having a thickness of 5 mm, and 0.22 W/(m·K)) was used. At 600°C, an aluminosilicate plate ("RS-100" obtained from ZIRCAR Refractory Composites, Inc., having 3/16 inches, and 0.62 W/(m·K)) was used.

Next, a thermocouple 1 (a sheath thermocouple K type (SCHS1-0), having a diameter of 0.15, Class JIS1, obtained from CHINO Corporation), an aluminum plate, the thermal insulation material, an aluminum plate, a thermocouple 2 (a sheath thermocouple K type (SCHS1-0), having a diameter of 0.15, Class JIS1, obtained from CHINO Corporation), the standard plate, and a thermocouple 3 (a sheath thermocouple K type (SCHS1-0), having a diameter of 0.15, Class JIS1, obtained from CHINO Corporation) were placed in this order in the descending order on the surface of a low board of a pneumatic press machine (obtained from Imoto Machinery Co., Ltd.), and tightly contacted with each other. The load of the press machine, of which the upper board and the lower board were heated to predetermined temperatures, was adjusted to 800 N (corresponding to 2 MPa), and then pressurization was performed. The measurement was continued in the heating-pressurizing state until the temperatures detected by the thermocouples stabilized. The measurement was performed in two cases of measurement temperatures, namely a case in which the upper board was set to 80°C and the lower board was set to 30°C, and a case in which the upper board was set to 600°C and the lower board was set to 40°C. It was assumed here that a temperature having stabilized means a temperature change over an around 10-minute continuous period of time being within ±0.1°C. The thermal conductivity k1 of the thermal insulation material was calculated according to the formula (i) below based on the temperatures detected by the thermocouples after the temperatures had stabilized, the thickness of the thermal insulation material under compression, and the thermal conductivity and the thickness of the standard sample. The thermal conductivity of the obtained thermal insulation layer is indicated in Table 3.

$$k1 = k2 \times (L1 \times \Delta T1) / (L2 \times \Delta T2) \quad ---(i)$$

(In the formula, k1 represents the thermal conductivity [W/(m·K)] of the thermal insulation layer, k2 represents the thermal conductivity [W/(m·K)] of the standard plate, L1 represents the thickness of the thermal insulation layer under pressurization, L2 represents the thickness of the standard plate, ΔT1 represents the temperature difference between the temperature of the second thermocouple and the temperature of the third thermocouple, and ΔT2 represents the temperature difference between the temperature of the first thermocouple and the temperature of the second thermocouple.)

(5) Thermal resistance

As the thermal resistance, a thermal resistance at 80°C at 2 MPa was measured according to "JIS A 1412-1:2016 "Method for measuring thermal resistance and thermal conductivity of thermal insulation materials-Section 2: Heat flow meter method (HFM method)". The thermal conductivity k1 was calculated in the same manner as the method for measuring the thermal conductivity described above, and the thermal resistance θ1 was calculated according to the formula (ii) below.

$$\theta 1 = L1/k1 \quad ---(ii)$$

(In the formula, θ1 represents the thermal resistance [(m²·K)/W] of the thermal insulation layer, k1 represents the thermal conductivity [W/(m·K)] of the thermal insulation layer, and L1 represents the thickness of the thermal insulation material under pressurization.)

(6) Flexural strength

The flexural strength was evaluated based on what is generally referred to as a three-point flexural strength. For the three-point flexural strength, a three-point flexural test was performed according to Japanese Industrial Standards JIS A9521:2017 using a tensile compression universal tester ("TG-5kN" obtained from MinebeaMitsumi Inc.). The dimensions of the test piece were 100 mm × 40 mm × 2 mmt, and the distance between fulcra was set to 50 mm. The flexural strength of the obtained thermal insulation layer is indicated in Table 3.

(7) Cutting processability

A test piece having a size of 30 mm × 30 mm was produced by cutting the thermal insulation layer with a force of 20 N using a scraper spare blade ("EA524B-5" obtained from ESCO Co., Ltd.), and the cutting processability here was evaluated according to the evaluation criteria listed below. The cutting processability of the obtained thermal insulation layer is indicated in Table 3.

(Evaluation criteria)

A: The thermal insulation material cut easily, and the test piece was kept in the same shape.
B: The thermal insulation material did not cut easily, powder came off the cutting surface, and the test piece was not kept in the same shape.

[Table 3]

| | | Thermal insulation layer | | | | | | |
|---|---|---|---|---|---|---|---|---|
| | Density [g/cm³] | Cumulative proportion $R_1$ | Cumulative proportion $R_2$ | Area proportion [%] of voids | Thermal conductivity 80°C, 2 MPa [W/(m·K)] | Thermal conductivity 600°C, 2 MPa [W/(m·K)] | Bending strength [N/cm²] | Cutting processability |
| Ex. 1 | 0.40 | 0.02 | 0.99 | 6 | 0.032 | 0.061 | 30 | A |
| Ex. 2 | 0.30 | 0.02 | 0.99 | 15 | 0.032 | 0.061 | 15 | B |
| Ex. 3 | 0.38 | 0.25 | 0.86 | 3 | 0.034 | 0.063 | 62 | A |
| Ex. 4 | 0.30 | 0.25 | 0.86 | 15 | 0.034 | 0.063 | 13 | B |
| Ex. 5 | 0.38 | 0.34 | 0.83 | 4 | 0.034 | 0.063 | 123 | A |
| Comp. Ex. 1 | 0.30 | 0.34 | 0.83 | 15 | 0.033 | 0.063 | 10 | B |
| Comp. Ex. 2 | 0.40 | 1.00 | 0.19 | 9 | 0.040 | 0.070 | 10 | B |
| Ex. 6 | 0.40 | 0.03 | 0.98 | 2 | 0.030 | 0.056 | 29 | A |
| Ex. 7 | 0.40 | 0.05 | 0.87 | 3 | 0.033 | 0.052 | 34 | A |
| Ex. 8 | 0.25 | 0.03 | 0.98 | 14 | 0.032 | 0.052 | 13 | A |
| Comp. Ex. 3 | 0.46 | 0.00 | 0.99 | 7 | 0.040 | 0.070 | 29 | B |
| Comp. Ex. 4 | 0.29 | 0.26 | 0.86 | 0 | 0.033 | 0.061 | 5 | C |
| Comp. Ex. 5 | 0.52 | 0.50 | 0.67 | 0 | 0.045 | 0.075 | 15 | B |
| Comp. Ex. 6 | 0.27 | 0.17 | 0.92 | 22 | 0.056 | 0.085 | 20 | B |

The embodiment has been described above. However, the embodiment described above has been presented as an example, and the present invention is not to be limited by the embodiment described above. The embodiment described above can be carried out in various other modes, and various combinations, omissions, replacements, modifications, and the like are applicable within the scope of the spirit of the invention. The embodiment and modifications thereof are included in the scope and spirit of the invention, and are included in the scope of the invention described in the claims and equivalents thereof.

Aspects of the embodiment of the present invention are, for example, as follows.

<1> A thermal insulation material, including:

a thermal insulation layer containing silicon dioxide particles and inorganic fibers,
wherein a density $\rho$ [g/cm$^3$] of the thermal insulation layer, and a cumulative proportion $R_1$ for a fiber length of longer than 0 mm and shorter than 4 mm regarding the inorganic fibers contained in the thermal insulation layer and a cumulative proportion $R_2$ for a fiber length of 3 mm or longer and shorter than 30 mm regarding the inorganic fibers contained in the thermal insulation layer satisfy a relational expression (I) below, where the cumulative proportion $R_1$ and the cumulative proportion $R_2$ are calculated according to (d) Cumulative proportion calculation formulae below when the inorganic fibers contained in the thermal insulation layer are summed up based on (a) Class divisions defined below, (b) Class value condition defined below, and (c) Frequency condition defined below,

$$\text{Relational expression (I):}$$
$$0.23R_1 + 0.24 < \rho \leq -0.11R_2 + 0.53$$

(a) Class divisions:
Fiber length of longer than 0 mm and shorter than 1 mm, fiber length of 1 mm or longer and shorter than 2 mm, fiber length of 2 mm or longer and shorter than 3 mm, ..., and fiber length of 29 mm or longer and shorter than 30 mm
(b) Class value condition:
Median of each class (fiber length of 0.5 mm, fiber length of 1.5 mm, fiber length of 2.5 mm, ..., and fiber length of 29.5 mm)
(c) Frequency condition:
Number of inorganic fibers belonging to each class
(d) Cumulative proportion calculation formulae:

$R_1$ = {(Product of class value and frequency of a fiber length class of longer than 0 mm and shorter than 1 mm) + (Product of class value and frequency of a fiber length class of 1 mm or longer and shorter than 2 mm) + (Product of class value and frequency of a fiber length class of 2 mm or longer and shorter than 3 mm) + (Product of class value and frequency of a fiber length class of 3 mm or longer and shorter than 4 mm)} / (Sum total of products of class value and frequency of all classes) fiber length class of 4 mm or longer and shorter than 5

$R_2$ = {(Product of class value and frequency of a fiber length class of 3 mm or longer and shorter than 4 mm) + (Product of class value and frequency of a fiber length class of 4 mm or longer and shorter than 5 mm) + ... + (Product of class value and frequency of a fiber length class of 29 mm or longer and shorter than 30 mm)} / (Sum total of products of class value and frequency of all classes).

<2> The thermal insulation material according to <1>,
wherein the cumulative proportion $R_1$ satisfies an expression (II) below,

$$\text{Expression (II): } R_1 \leq 0.85.$$

<3> The thermal insulation material according to <1> or <2>,
wherein the cumulative proportion $R_2$ satisfies an expression (III) below

$$\text{Expression (III): } R_2 \geq 0.30.$$

<4> The thermal insulation material according to any one of <1> to <3>,
wherein the density $\rho$ of the thermal insulation layer is from 0.2 g/cm$^3$ through 0.5 g/cm$^3$.
<5> The thermal insulation material according to any one of <1> to <4>,
wherein an area proportion of voids in surfaces of the thermal insulation layer is greater than 0% and less than 22%.
<6> The thermal insulation material according to any one of <1> to <5>,
wherein the silicon dioxide particles are at least one type selected from the group consisting of dry silica, wet silica, and silica aerogel.
<7> The thermal insulation material according to any one of <1> to <6>,
wherein the silicon dioxide particles are hydrophilic fumed silica.
<8> The thermal insulation material according to any one of <1> to <7>,
wherein a thermal conductivity of the thermal insulation layer under pressurization at 80°C at 2 MPa is lower than 0.045 W/(m·K).
<9> The thermal insulation material according to any one of <1> to <8>,
wherein a flexural strength of the thermal insulation layer is from 10 N/cm$^2$ through 150 N/cm$^2$.
<10> The thermal insulation material according to any one of <1> to <9>, further including:

a coating layer made of a resin film,
wherein the thermal insulation layer and the coating layer are laminated.

<11> The thermal insulation material according to <10>,

wherein two or more coating layers are laminated, each of the two or more coating layers being the coating layer, and
the two or more coating layers enclose the thermal insulation layer by sandwiching the thermal insulation layer from both sides in a direction of a thickness of the thermal insulation layer, and a gap between the coating layers is tightly sealed.

<12> The thermal insulation material according to <10> or <11>,
wherein the coating layer includes a ventilation port that joins the gap and an external space.
<13> The thermal insulation material according to any one of <1> to <12>,
wherein the thermal insulation material is placed between cells of a battery pack.
<14> A method for producing a thermal insulation material, the method including:

a mixing step of mixing silicon dioxide particles and inorganic fibers having an average fiber length of from 4 mm through 35 mm in a solvent having a surface tension of from 21 mN/m through 73 mN/m, to obtain a mixture liquid having a consistency of from 60 through 160;
a coating step of applying the mixture liquid obtained in the mixing step, to obtain a coating film; and
a molding step of molding the coating film obtained in the coating step, to obtain a thermal insulation layer.

<15> The method for producing a thermal insulation material according to <14>,
wherein the solvent is a protic solvent.

The present application claims priority to Japanese Patent Application No. 2021-166144 filed October 8, 2021. The entire contents of Japanese Patent Application No. 2021-166144 are incorporated herein by reference.

Reference Signs List

| | |
|---|---|
| 1A, 1B | thermal insulation material |
| 11, 321A | hydrophilic fumed silica |
| 12, 321B | inorganic fibers |
| 10, 321 | thermal insulation layer |
| 20, 322 | coating layer |
| 30 | lithium ion battery |

31          cell
32          thermal insulation material
33          housing

**Claims**

1.  A thermal insulation material, comprising:

    a thermal insulation layer containing silicon dioxide particles and inorganic fibers,
    wherein a density $\rho$ [g/cm$^3$] of the thermal insulation layer, and a cumulative proportion $R_1$ for a fiber length of longer than 0 mm and shorter than 4 mm regarding the inorganic fibers contained in the thermal insulation layer and a cumulative proportion $R_2$ for a fiber length of 3 mm or longer and shorter than 30 mm regarding the inorganic fibers contained in the thermal insulation layer satisfy a relational expression (I) below, where the cumulative proportion $R_1$ and the cumulative proportion $R_2$ are calculated according to (d) Cumulative proportion calculation formulae below when the inorganic fibers contained in the thermal insulation layer are summed up based on (a) Class divisions defined below, (b) Class value condition defined below, and (c) Frequency condition defined below,

    $$\text{Relational expression (I):}$$
    $$0.23R_1 + 0.24 < \rho \le -0.11R_2 + 0.53$$

    (a) Class divisions:
    Fiber length of longer than 0 mm and shorter than 1 mm, fiber length of 1 mm or longer and shorter than 2 mm, fiber length of 2 mm or longer and shorter than 3 mm, ..., and fiber length of 29 mm or longer and shorter than 30 mm
    (b) Class value condition:
    Median of each class (fiber length of 0.5 mm, fiber length of 1.5 mm, fiber length of 2.5 mm, ..., and fiber length of 29.5 mm)
    (c) Frequency condition:
    Number of inorganic fibers belonging to each class
    (d) Cumulative proportion calculation formulae:

    $R_1$ = {(Product of class value and frequency of a fiber length class of longer than 0 mm and shorter than 1 mm) + (Product of class value and frequency of a fiber length class of 1 mm or longer and shorter than 2 mm) + (Product of class value and frequency of a fiber length class of 2 mm or longer and shorter than 3 mm) + (Product of class value and frequency of a fiber length class of 3 mm or longer and shorter than 4 mm)} / (Sum total of products of class value and frequency of all classes)

    $R_2$ = {(Product of class value and frequency of a fiber length class of 3 mm or longer and shorter than 4 mm) + (Product of class value and frequency of a fiber length class of 4 mm or longer and shorter than 5 mm) + ... + (Product of class value and frequency of a fiber length class of 29 mm or longer and shorter than 30 mm)} / (Sum total of products of class value and frequency of all classes).

2.  The thermal insulation material according to claim 1,
    wherein the cumulative proportion $R_1$ satisfies an expression (II) below,

    $$\text{Expression (II): } R_1 \le 0.85.$$

3.  The thermal insulation material according to claim 1,
    wherein the cumulative proportion $R_2$ satisfies an expression (III) below

Expression (III): $R_2 \geq 0.30$.

4. The thermal insulation material according to claim 1,
   wherein the density $\rho$ of the thermal insulation layer is from 0.2 g/cm$^3$ through 0.5 g/cm$^3$.

5. The thermal insulation material according to claim 1,
   wherein an area proportion of voids in surfaces of the thermal insulation layer is greater than 0% and less than 22%.

6. The thermal insulation material according to claim 1,
   wherein the silicon dioxide particles are at least one type selected from the group consisting of dry silica, wet silica, and silica aerogel.

7. The thermal insulation material according to claim 6,
   wherein the silicon dioxide particles are hydrophilic fumed silica.

8. The thermal insulation material according to claim 1,
   wherein a thermal conductivity of the thermal insulation layer under pressurization at 80°C at 2 MPa is lower than 0.045 W/(m·K).

9. The thermal insulation material according to claim 1,
   wherein a flexural strength of the thermal insulation layer is from 10 N/cm$^2$ through 150 N/cm$^2$.

10. The thermal insulation material according to claim 1, further comprising:

    a coating layer made of a resin film,
    wherein the thermal insulation layer and the coating layer are laminated.

11. The thermal insulation material according to claim 10,

    wherein two or more coating layers are laminated, each of the two or more coating layers being the coating layer, and
    the two or more coating layers enclose the thermal insulation layer by sandwiching the thermal insulation layer from both sides in a direction of a thickness of the thermal insulation layer, and a gap between the coating layers is tightly sealed.

12. The thermal insulation material according to claim 11,
    wherein the coating layers include a ventilation port that joins the gap and an external space.

13. The thermal insulation material according to claim 1,
    wherein the thermal insulation material is placed between cells of a battery pack.

14. A method for producing a thermal insulation material, the method comprising:

    a mixing step of mixing silicon dioxide particles and inorganic fibers having an average fiber length of from 4 mm through 35 mm in a solvent having a surface tension of from 21 mN/m through 73 mN/m, to obtain a mixture liquid having a consistency of from 60 through 160;
    a coating step of applying the mixture liquid obtained in the mixing step, to obtain a coating film; and
    a molding step of molding the coating film obtained in the coating step, to obtain a thermal insulation layer.

15. The method for producing a thermal insulation material according to claim 14,
    wherein the solvent is a protic solvent.

# FIG.1

# FIG.2

# FIG.3

# FIG.4

# FIG.5

1B

20A(20)

10

Y

Z → X

# FIG.6

DIRECTION OF
THICKNESS

PLA-
NAR
DIREC-
TION

32a

33

32a

30

32  31  32  31  32  31  32  31  32

# FIG.7

# FIG.8

[SEM IMAGE OF SURFACE OF EXAMPLE 1]

# FIG.9

[DRAWING ILLUSTRATING RESULT OF
BINARIZATION OF SURFACE OF EXAMPLE 1]

# FIG.10

[SEM IMAGE OF SURFACE OF COMPARATIVE EXAMPLE 5]

# FIG.11

[DRAWING ILLUSTRATING RESULT OF BINARIZATION
OF SURFACE OF COMPARATIVE EXAMPLE 5]

# FIG.12

[SEM IMAGE OF SURFACE OF COMPARATIVE EXAMPLE 6]

# FIG.13

[DRAWING ILLUSTRATING RESULT OF BINARIZATION
OF SURFACE OF COMPARATIVE EXAMPLE 6]

## INTERNATIONAL SEARCH REPORT

| International application No. |
|---|
| **PCT/JP2022/037305** |

| A. | CLASSIFICATION OF SUBJECT MATTER |
|---|---|

*F16L 59/04*(2006.01)i; *F16L 59/02*(2006.01)i; *H01M 10/613*(2014.01)i; *H01M 10/647*(2014.01)i; *H01M 10/658*(2014.01)i
FI:    F16L59/04; F16L59/02; H01M10/658; H01M10/647; H01M10/613

According to International Patent Classification (IPC) or to both national classification and IPC

| B. | FIELDS SEARCHED |
|---|---|

Minimum documentation searched (classification system followed by classification symbols)

F16L59/04; F16L59/02; H01M10/613; H01M10/647; H01M10/658

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2015/182768 A1 (ASAHI GLASS CO., LTD.) 03 December 2015 (2015-12-03) claims, paragraphs [0011]-[0067], fig. 1-4 | 1-12, 14-15 |
| Y | | 13 |
| Y | JP 2021-034278 A (IBIDEN CO., LTD.) 01 March 2021 (2021-03-01) paragraph [0023], fig. 2 | 13 |
| A | US 4447345 A (GRUENZWEIG & HARTMANN UND GLASFASER AG) 08 May 1984 (1984-05-08) entire text, all drawings | 1-15 |
| A | JP 2006-017169 A (ASAHI FIBER GLASS CO., LTD.) 19 January 2006 (2006-01-19) entire text, all drawings | 1-15 |
| A | JP 2004-011756 A (MATSUSHITA REFRIG CO., LTD.) 15 January 2004 (2004-01-15) entire text, all drawings | 1-15 |
| A | JP 2015-145696 A (MITSUBISHI ELECTRIC CORP.) 13 August 2015 (2015-08-13) entire text, all drawings | 1-15 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 December 2022** | **20 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/037305**

| Patent document cited in search report | | | Publication date (day/month/year) | Patent family member(s) | | | Publication date (day/month/year) |
|---|---|---|---|---|---|---|---|
| WO | 2015/182768 | A1 | 03 December 2015 | EP | 3150897 | A1 | |
| | | | | claims, paragraphs [0021]-[0110], fig. 1-4 | | | |
| | | | | CN | 106415107 | A | |
| | | | | KR | 10-2017-0012202 | A | |
| JP | 2021-034278 | A | 01 March 2021 | US | 2022/0200080 | A1 | |
| | | | | paragraph [0032], fig. 2 | | | |
| | | | | WO | 2021/039844 | A1 | |
| | | | | EP | 3835262 | A1 | |
| | | | | KR | 10-2021-0034671 | A | |
| | | | | CN | 112714978 | A | |
| US | 4447345 | A | 08 May 1984 | EP | 59860 | A1 | |
| | | | | entire text, all drawings | | | |
| JP | 2006-017169 | A | 19 January 2006 | (Family: none) | | | |
| JP | 2004-011756 | A | 15 January 2004 | US | 2005/0175809 | A1 | |
| | | | | entire text, all drawings | | | |
| | | | | WO | 2003/102460 | A1 | |
| | | | | EP | 1510747 | A1 | |
| | | | | CN | 1659402 | A | |
| JP | 2015-145696 | A | 13 August 2015 | WO | 2015/115149 | A1 | |
| | | | | entire text, all drawings | | | |
| | | | | CN | 105992902 | A | |

Form PCT/ISA/210 (patent family annex) (January 2015)

**REFERENCES CITED IN THE DESCRIPTION**

**Patent documents cited in the description**

- JP 2000048867 A

- JP 2021166144 A